(19) Europäisches Patentamt
European Patent Office
Office européen des brevets

(11) **EP 4 391 125 A1**

(12) **EUROPEAN PATENT APPLICATION**

(43) Date of publication:
**26.06.2024 Bulletin 2024/26**

(21) Application number: **23211636.8**

(22) Date of filing: **23.11.2023**

(51) International Patent Classification (IPC):
**H01M 8/04186** (2016.01)    **H01M 8/04746** (2016.01)
**H01M 8/18** (2006.01)

(52) Cooperative Patent Classification (CPC):
**H01M 8/188; H01M 8/04186; H01M 8/04753**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.12.2022 US 202218065576**

(71) Applicant: **ESS Tech, Inc.
Wilsonville, Oregon 97070 (US)**

(72) Inventors:
• **KISSICK, Sean
Portland, OR, 97202 (US)**
• **SONG, Yang
West Linn, OR, 97068 (US)**
• **MCDONALD, Timothy J.
Portland, OR, 97202 (US)**

(74) Representative: **Behr, Wolfgang
Lorenz Seidler Gossel
Rechtsanwälte Patentanwälte
Partnerschaft mbB
Widenmayerstraße 23
80538 München (DE)**

Remarks:
A request for correction of the description has been filed pursuant to Rule 139 EPC. A decision on the request will be taken during the proceedings before the Examining Division (Guidelines for Examination in the EPO, A-V, 3.).

(54) **REBALANCING CELL SYSTEM FOR REDOX FLOW BATTERY**

(57) Systems and methods are provided for rebalancing cells in a redox flow battery. In one example, a method of operating a rebalancing cell in a redox flow battery system includes measuring a state-of-charge (SOC) of a redox flow battery in the redox flow battery system, calculating an electrolyte concentration from the measured SOC of the redox flow battery, and maintaining a rebalancing reaction rate at the rebalancing cell. In one example, maintaining the rebalancing includes, responsive to a change in the electrolyte concentration, adjusting an electrolyte flow rate to the rebalancing cell and adjusting a hydrogen flow rate to the rebalancing cell.

FIG. 7A

**Description**

FIELD

The present description relates generally to systems for rebalancing cells for use in redox flow batteries and methods for operating such rebalancing cell systems.

BACKGROUND AND SUMMARY

Redox flow batteries are suitable for grid-scale storage applications due to their capability for scaling power and capacity independently, as well as for charging and discharging over thousands of cycles with reduced performance losses in comparison to conventional battery technologies. An all-iron hybrid redox flow battery is particularly attractive due to incorporation of low-cost, earth-abundant materials. In general, iron redox flow batteries (IFBs) rely on iron, salt, and water for electrolyte, thus including simple, earth-abundant, and inexpensive materials, and eliminating incorporation of harsh chemicals and reducing an environmental footprint thereof.

The IFB may include a positive (redox) electrode where a redox reaction occurs and a negative (plating) electrode where ferrous iron ($Fe^{2+}$) in the electrolyte may be reduced and plated. The IFB may further include a plurality of rebalancing cells to maintain electrolyte health and battery capacity. In one example, electrolyte rebalancing occurs by reducing electrolyte with hydrogen gas at the rebalancing cell. Specifically, hydrogen gas supplied at a negative side of the rebalancing cell is contacted with liquid electrolyte supplied at a positive side of the rebalancing cell. Electrolyte flooding at the negative side of the rebalancing cell can occur when hydrogen gas pressure at the negative side is insufficient. In one example, the hydrogen gas pressure may be insufficient when the electrolyte rebalancing reaction rate at the rebalancing cell is higher and the hydrogen supplied to the negative side of the rebalancing cell is less than a stoichiometric amount of hydrogen. In order to mitigate electrolyte flooding, the size or volume of the rebalancing cell may be reduced to aid in maintaining a higher hydrogen gas pressure. Furthermore, to reduce electrolyte flooding, the rebalancing cell may be operated by supplying a constant excess amount of hydrogen gas to the rebalancing cell and/or maintaining a constant electrolyte flow while operating the rebalancing cell, independent of redox flow battery system operating conditions.

The inventors have recognized several drawbacks of the above-mentioned rebalancing cell operation. In particular, smaller rebalancing cells exhibit lower rebalancing reaction rates, especially during conditions such as lower redox flow battery state-of-charge conditions when hydrogen gas at the rebalancing cell may be in excess. Similarly, maintaining a constant electrolyte flow at the rebalancing cell while operating the rebalancing cell necessitates maintaining an electrolyte flow lower than a stoichiometric amount of electrolyte, which lowers the rebalancing reaction rate at the rebalancing cell, thereby reducing performance of the rebalancing cell. Furthermore, supplying a constant excess amount of hydrogen gas to the rebalancing cell while operating the rebalancing cell increases operational costs. Moreover, the presence of excess hydrogen gas in the rebalancing cell increases the rate of parasitic side reactions, leading to reduced performance of the redox flow battery system. Further still, permitting electrolyte flooding of the rebalancing cell reduces the performance of the redox flow battery system, and can shorten the useful life of the rebalancing cell.

In one example, the issues described above may be at least partially addressed by a method of operating a rebalancing cell system. The method includes, in one example, measuring a state-of-charge (SOC) of a redox flow battery in the redox flow battery system, calculating an electrolyte concentration from the measured SOC of the redox flow battery, and maintaining a rebalancing reaction rate at the rebalancing cell. In such an example, maintaining the rebalancing reaction rate at the rebalancing cell includes, responsive to a change in the electrolyte concentration, adjusting an electrolyte flow rate to the rebalancing cell and adjusting a hydrogen flow rate to the rebalancing cell. In one example, adjusting the electrolyte flow rate to the rebalancing cell may include reducing the electrolyte flow rate responsive to an increase in the electrolyte concentration when the electrolyte concentration is above a threshold electrolyte concentration. In another example, adjusting the hydrogen flow rate may include increasing the hydrogen flow rate responsive to the increase in the electrolyte concentration when the electrolyte concentration is below the threshold electrolyte concentration. In this way, flooding of the rebalancing cell can be reduced, while reducing excess reactant flow, thereby lowering operational costs. Furthermore, power losses arising from parasitic side reactions are decreased, thereby increasing overall redox flow battery system efficiency.

It should be understood that the summary above is provided to introduce in simplified form a selection of concepts that are further described in the detailed description. It is not meant to identify key or essential features of the claimed subject matter, the scope of which is defined uniquely by the claims that follow the detailed description. Furthermore, the claimed subject matter is not limited to implementations that solve any disadvantages noted above or in any part of this disclosure.

BRIEF DESCRIPTION OF THE DRAWINGS

FIG. 1 shows a schematic diagram of an example redox flow battery system that includes a battery cell with redox and plating electrodes fluidically coupled to respective rebalancing cells.

FIGS. 2A and 2B show perspective views of the rebalancing cells of the redox flow battery system of FIG. 1 that includes a stack of internally shorted electrode assemblies.

FIG. 3 shows an exploded view of an electrode assembly for the rebalancing cell of FIGS. 2A and 2B.

FIGS. 4A and 4B show a cross-sectional view and a magnified inset view, respectively, of a first $H_2$ gas flow pattern in the rebalancing cell of FIGS. 2A and 2B.

FIGS. 5A and 5B show a cross-sectional view and a magnified inset view, respectively, of a second $H_2$ gas flow pattern in the rebalancing cell of FIGS. 2A and 2B.

FIGS. 6A and 6B show a cross-sectional view and a magnified inset view, respectively, of electrolyte flow in the rebalancing cell of FIGS. 2A and 2B.

FIGS. 7A and 7B show example partial flow configurations of the redox flow battery system of FIG. 1, including the rebalancing cell of FIGS. 2A and 2B.

FIGS. 8A and 8B show an example plots of operating conditions for the rebalancing cell of FIGS. 2A and 2B.

FIGS. 9 and 10 shows a flow chart of a method for operating a redox flow battery system of FIG. 1, including the rebalancing cells of FIGS. 2A and 2B.

FIGS. 11A and 11B show example plots of pH versus negative electrode plating efficiency, and redox flow battery state of charge versus open circuit voltage, respectively.

DETAILED DESCRIPTION

The following description relates to systems and methods for distributing hydrogen through rebalancing cells in a series flow arrangement. The rebalancing cells maintain electrolyte health and capacity in the redox flow battery. To perform this function, the rebalancing cells demand enough hydrogen flow into the unit to support a desired reaction rate. Using the series flow arrangement increase the hydrogen flowrate through the cells and achieve a more balanced hydrogen distribution when compared to parallel flow arrangements.

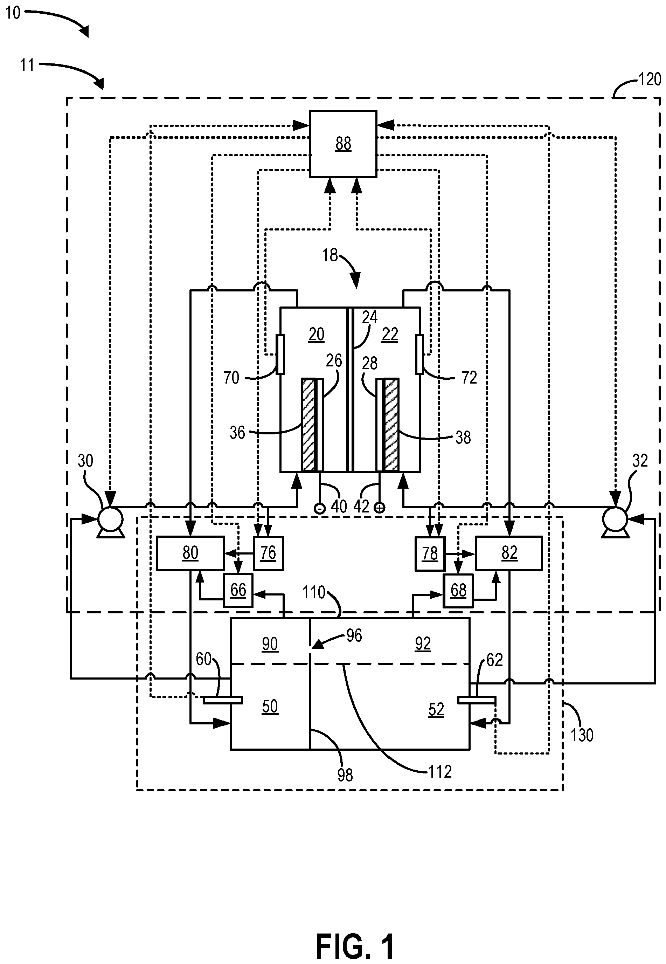

The redox flow battery is depicted schematically in FIG. 1 with an integrated multi-chambered tank having separate positive and negative electrolyte chambers. In some examples, the redox flow battery may be an all-iron flow battery (IFB) utilizing iron redox chemistry at both a positive (redox) electrode and the negative (plating) electrode of the IFB. The electrolyte chambers may be coupled to one or more battery cells, each cell including the positive and negative electrodes. Therefrom, electrolyte may be pumped through positive and negative electrode compartments respectively housing the positive and negative electrodes.

In some examples, the redox flow battery may be a hybrid redox flow battery. Hybrid redox flow batteries are redox flow batteries which may be characterized by deposition of one or more electroactive materials as a solid layer on an electrode (e. g., the negative electrode). Hybrid redox flow batteries may, for instance, include a chemical species which may plate via an electrochemical reaction as a solid on a substrate throughout a battery charge process. During battery discharge, the plated species may ionize via a further electrochemical reaction, becoming soluble in the electrolyte. In hybrid redox flow battery systems, a charge capacity (e. g., a maximum amount of energy stored) of the redox flow battery may be limited by an amount of metal plated during battery charge and may accordingly depend on an efficiency of the plating system as well as volume and surface area available for plating.

In some examples, electrolytic imbalances in the redox flow battery may result from numerous side reactions competing with desired redox chemistry, including hydrogen ($H_2$) gas generating reactions such as proton reduction and iron corrosion:

$$H^+ + e^- \leftrightarrow \tfrac{1}{2}H_2 \text{ (proton reduction)} \qquad (1)$$

$$Fe^0 + 2H^+ \leftrightarrow Fe^{2+} + H_2 \text{ (iron corrosion)} \qquad (2)$$

and charge imbalances from excess ferric iron ($Fe^{3+}$) generated during oxidation of iron plating:

$$2Fe^{3+} + Fe^0 \leftrightarrow 3Fe^{2+} \text{ (iron plating oxidation)} \qquad (3)$$

The reactions of equations (1) to (3) may limit iron plating and thereby decrease overall battery capacity. To address such imbalances, electrolyte rebalancing may be leveraged to both reduce $Fe^{3+}$ and eliminate excess $H_2$ gas via a single

redox reaction:

$$Fe^{3+} + \tfrac{1}{2}H_2 \rightarrow Fe^{2+} + H^+ \text{ (electrolyte rebalancing)} \qquad (4)$$

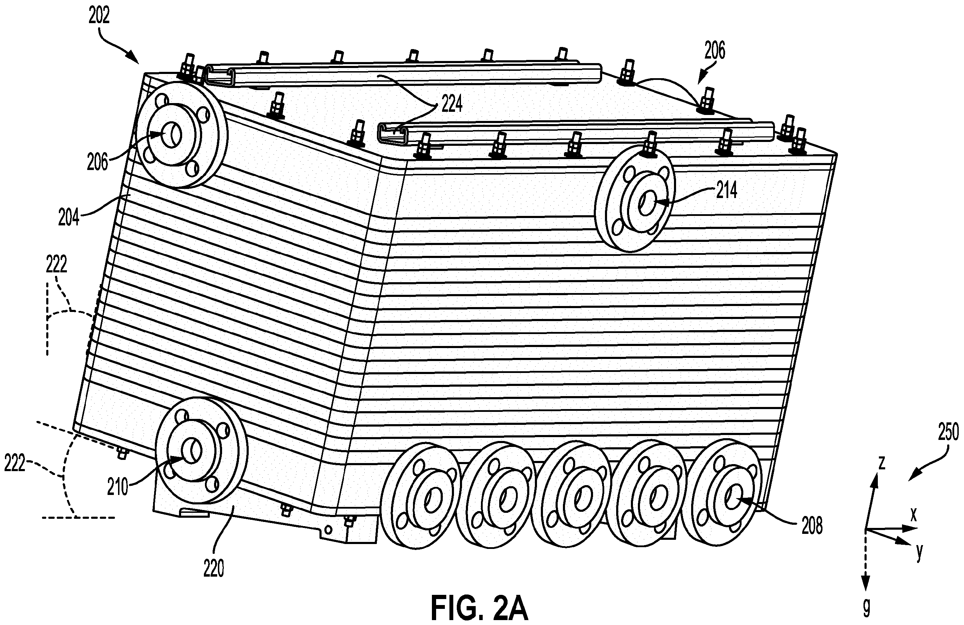

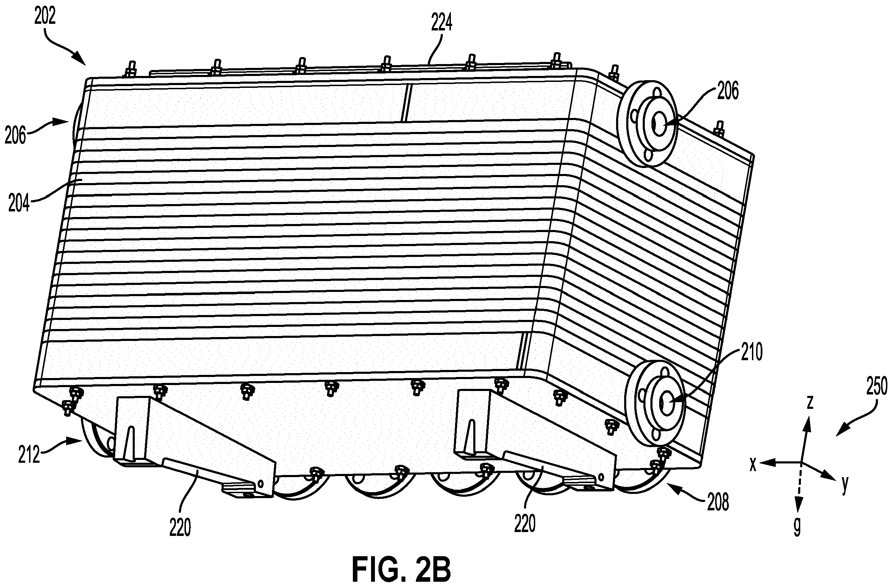

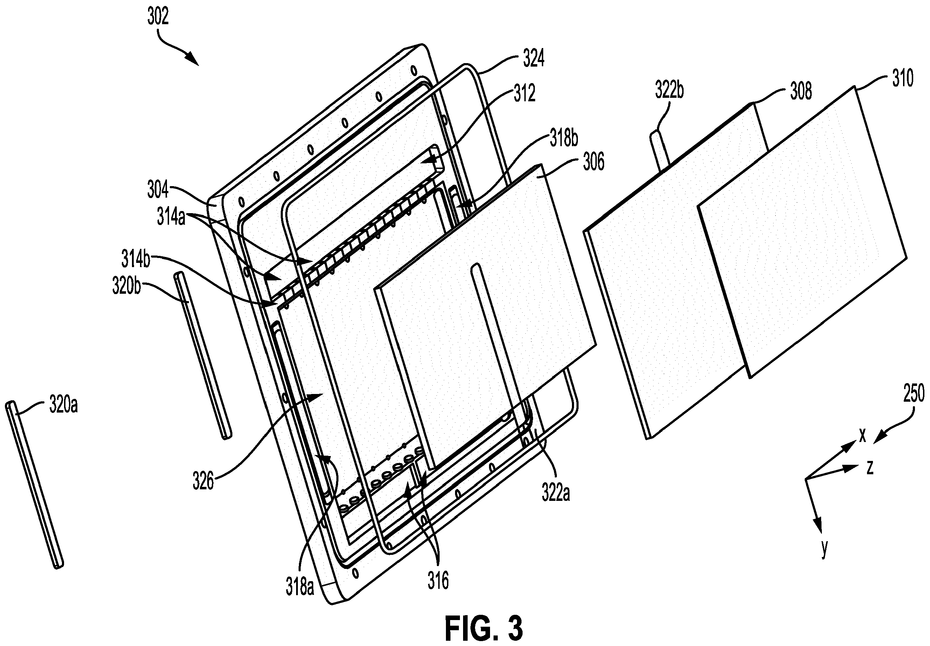

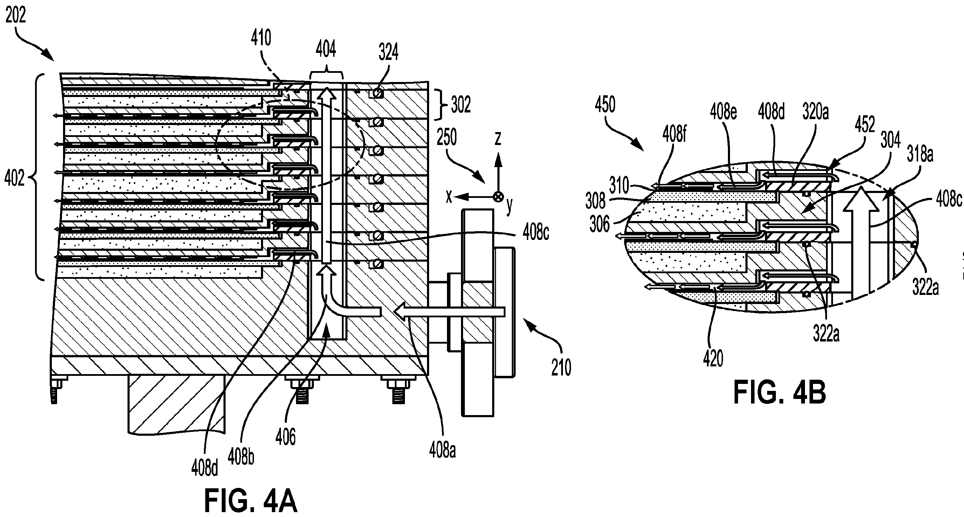

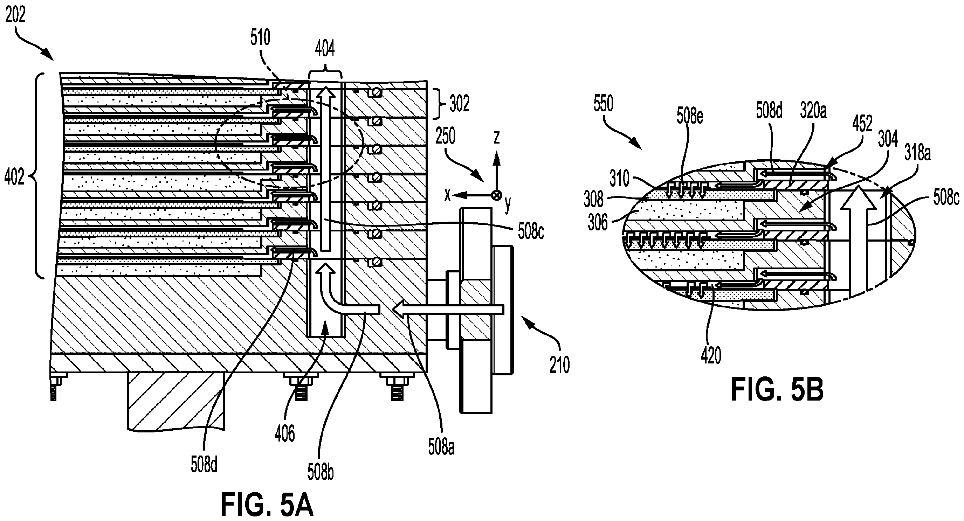

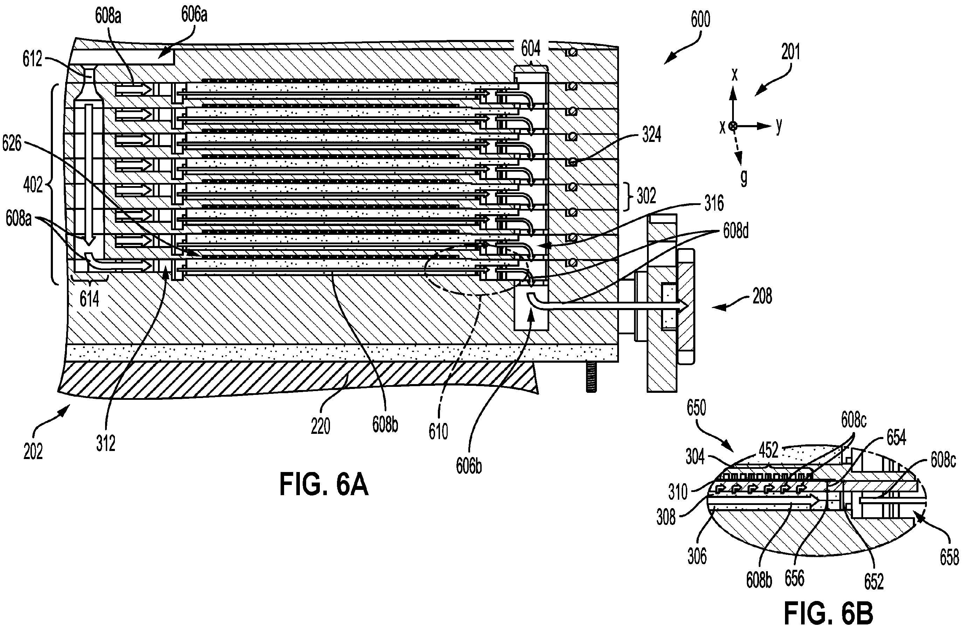

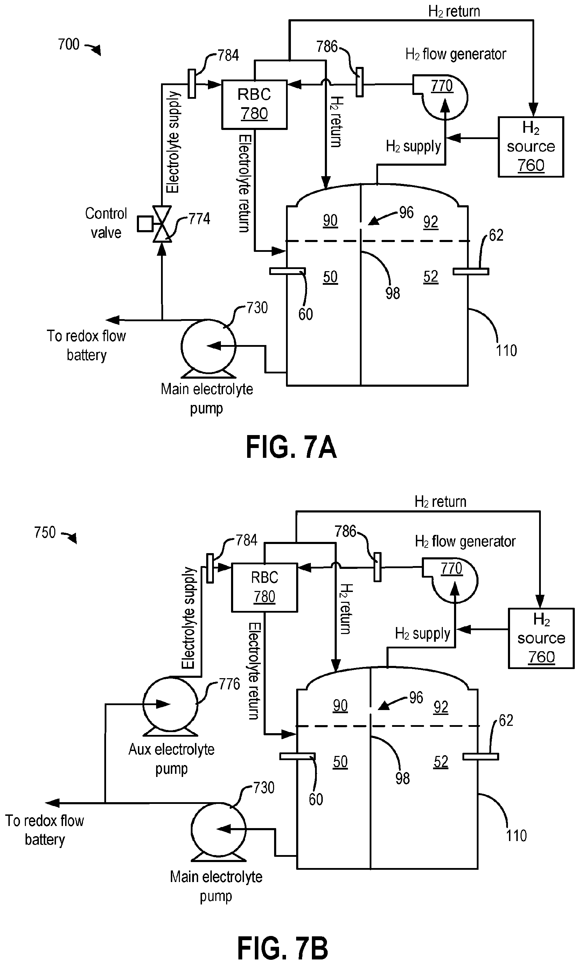

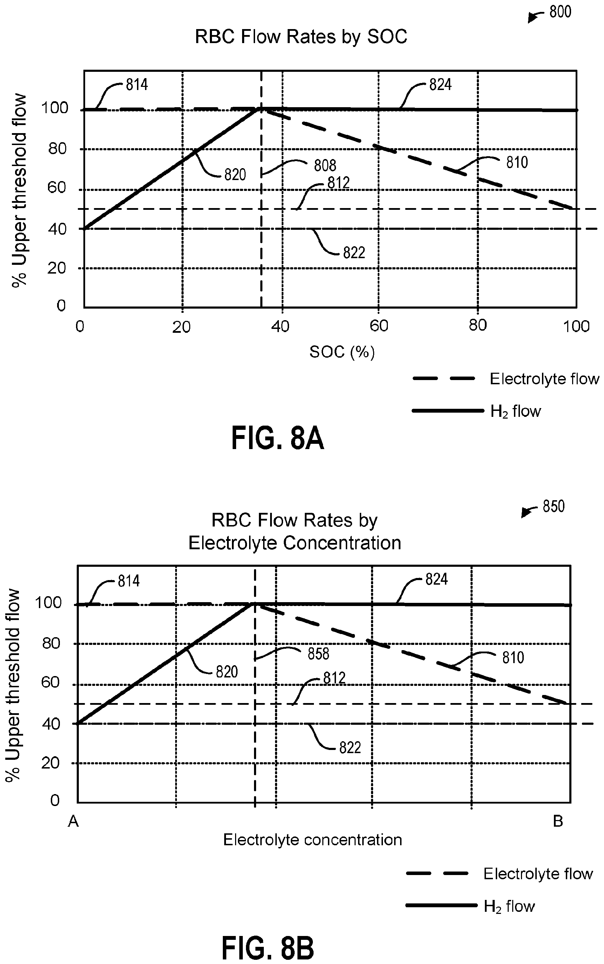

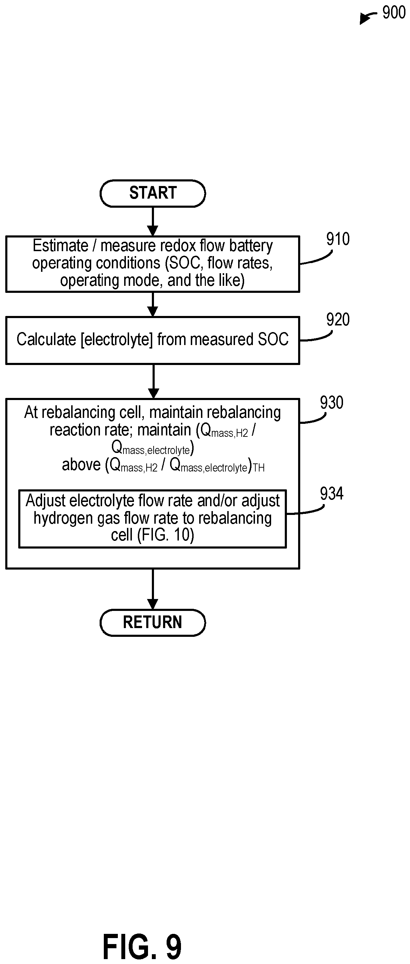

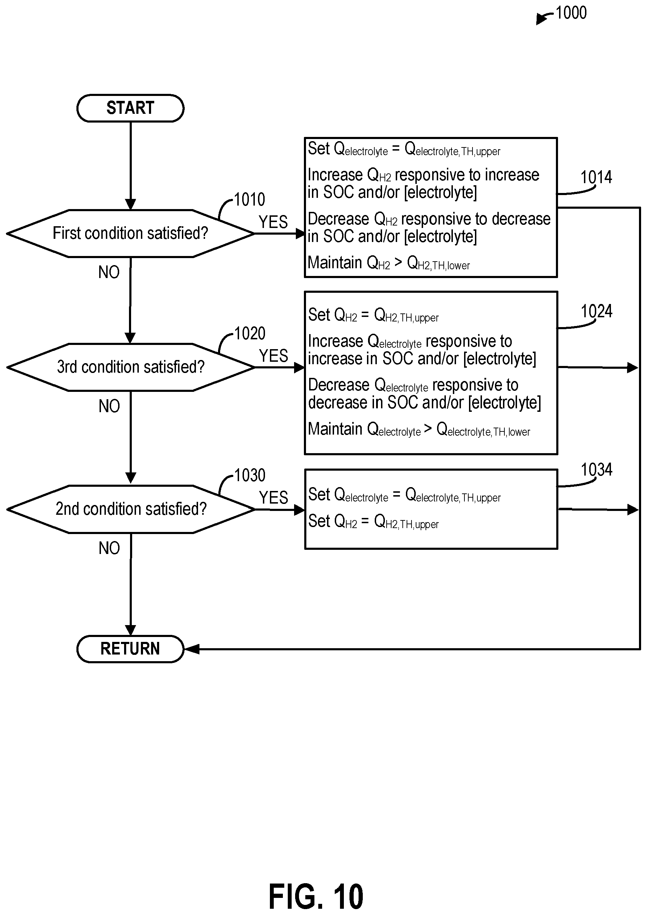

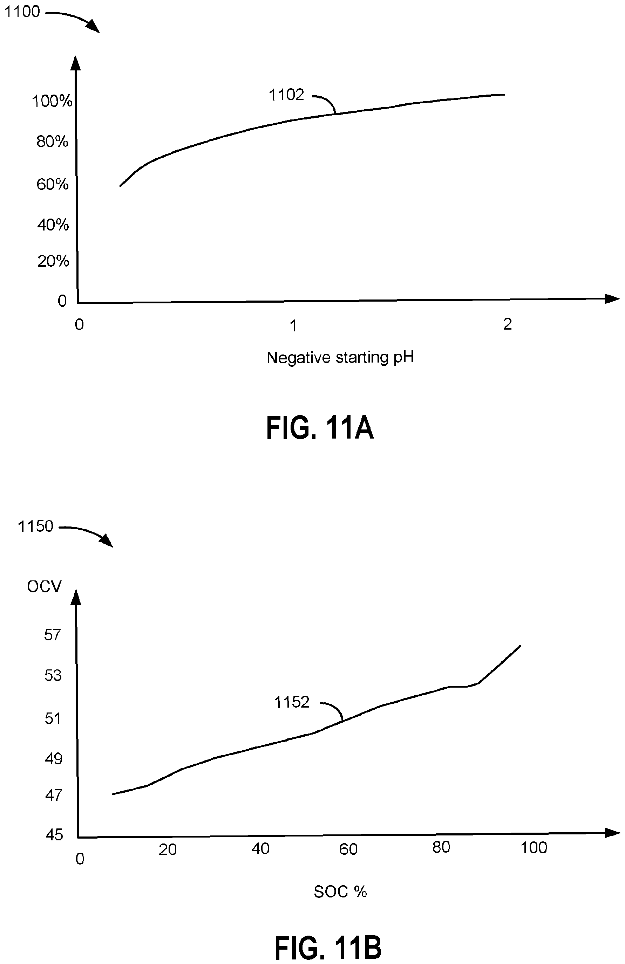

As described by embodiments herein, $Fe^{3+}$ reduction rates sufficient for relatively high performance applications may be reliably achieved via a rebalancing cell, such as the exemplary rebalancing cell of FIGS. 2A and 2B, including a stack of internally shorted electrode assemblies, such as the exemplary electrode assembly of FIG. 3. FIGS. 4A and 4B depict a first of $H_2$ gas flow pattern in the rebalancing cell, where the $H_2$ gas flows across negative electrodes and to a hydrogen gas outlet port. FIGS. 5A and 5B depict a second of $H_2$ gas flow pattern in the rebalancing cell, where the hydrogen gas outlet port is closed and the $H_2$ gas flows across positive electrodes and to a hydrogen gas relief port. FIGS. 6A and 6B depict aspects of electrolyte flow in the rebalancing cell, where the electrolyte may be distributed across positive electrodes of the internally shorted electrode assemblies via a combination of gravity feeding and capillary action (additionally or alternatively, and similar to convection of the $H_2$ gas across the negative electrodes. FIGS. 7A and 7B depict partial flow configurations of the redox flow battery system of FIG. 1, including electrolyte and hydrogen flow configurations to and from the rebalancing cells of FIGS. 2A and 2B. FIGS. 8A and 8B depict plots of rebalancing cell and redox flow battery system operating conditions. An exemplary method of operating a rebalancing cell system is depicted at FIGS. 9 and 10. The redox flow battery state of charge may be determined based on a redox flow battery plating efficiency, a shunt current, and an open circuit voltage state of charge. The plating efficiency may be correlated to pH and the open circuit voltage state of charge may be correlated to the open circuit voltage of the redox flow battery, as illustrated by the plots of FIGS. 11A and 11B.

As shown in FIG. 1, in a redox flow battery system 10 with redox flow battery 11, a negative electrode 26 may be referred to as a plating electrode and a positive electrode 28 may be referred to as a redox electrode. A negative electrolyte within a plating side (e. g., a negative electrode compartment 20) of a redox flow battery cell 18 may be referred to as a plating electrolyte, and a positive electrolyte on a redox side (e. g., a positive electrode compartment 22) of the redox flow battery cell 18 may be referred to as a redox electrolyte.

"Anode" refers to an electrode where electroactive material loses electrons and "cathode" refers to an electrode where electroactive material gains electrons. During battery charge, the negative electrolyte gains electrons at the negative electrode 26, and the negative electrode 26 is the cathode of the electrochemical reaction. During battery discharge, the negative electrolyte loses electrons, and the negative electrode 26 is the anode of the electrochemical reaction. Alternatively, during battery discharge, the negative electrolyte and the negative electrode 26 may be respectively referred to as an anolyte and the anode of the electrochemical reaction, while the positive electrolyte and the positive electrode 28 may be respectively referred to as a catholyte and the cathode of the electrochemical reaction. During battery charge, the negative electrolyte and the negative electrode 26 may be respectively referred to as the catholyte and the cathode of the electrochemical reaction, while the positive electrolyte and the positive electrode 28 may be respectively referred to as the anolyte and the anode of the electrochemical reaction. For simplicity, the terms "positive" and "negative" are used herein to refer to the electrodes, electrolytes, and electrode compartments in redox flow battery systems.

One example of a hybrid redox flow battery is an all-iron redox flow battery (IFB), in which the electrolyte includes iron ions in the form of iron salts (e. g., $FeCl_2$, $FeCl_3$, and the like), where the negative electrode 26 includes metal iron. For example, at the negative electrode 26, ferrous iron ($Fe^{2+}$) gains two electrons and plates as iron metal ($Fe^0$) onto the negative electrode 26 during battery charge, and $Fe^0$ loses two electrons and re-dissolves as $Fe^{2+}$ during battery discharge. At the positive electrode 28, $Fe^{2+}$ loses an electron to form ferric iron ($Fe^{3+}$) during battery charge, and $Fe^{3+}$ gains an electron to form $Fe^{2+}$ during battery discharge. The electrochemical reaction is summarized in equations (5) and (6), where the forward reactions (left to right) indicate electrochemical reactions during battery charge, while the reverse reactions (right to left) indicate electrochemical reactions during battery discharge:

$$Fe^{2+} + 2e^- \leftrightarrow Fe^0 \text{ -0. 44 V (negative electrode)} \qquad (5)$$

$$2Fe^{2+} \leftrightarrow 2Fe^{3+} + 2e^- \text{ +0. 77 V (positive electrode)} \qquad (6)$$

As discussed above, the negative electrolyte used in the IFB may provide a sufficient amount of $Fe^{2+}$ so that, during battery charge, $Fe^{2+}$ may accept two electrons from the negative electrode 26 to form $Fe^0$ and plate onto a substrate. During battery discharge, the plated $Fe^0$ may lose two electrons, ionizing into $Fe^{2+}$ and dissolving back into the electrolyte. An equilibrium potential of the above reaction is -0. 44 V and this reaction therefore provides a negative terminal for the desired system. On the positive side of the IFB, the electrolyte may provide $Fe^{2+}$ during battery charge which loses an electron and oxidizes to $Fe^{3+}$. During battery discharge, $Fe^{3+}$ provided by the electrolyte becomes $Fe^{2+}$ by absorbing an electron provided by the positive electrode 28. An equilibrium potential of this reaction is +0. 77 V, creating a positive terminal for the desired system.

The IFB may provide the ability to charge and recharge electrolytes therein in contrast to other battery types utilizing non-regenerating electrolytes. Charge may be achieved by respectively applying an electric current across the electrodes 26 and 28 via terminals 40 and 42. The negative electrode 26 may be electrically coupled via the terminal 40 to a negative side of a voltage source so that electrons may be delivered to the negative electrolyte via the positive electrode 28 (e. g., as $Fe^{2+}$ is oxidized to $Fe^{3+}$ in the positive electrolyte in the positive electrode compartment 22). The electrons provided to the negative electrode 26 may reduce the $Fe^{2+}$ in the negative electrolyte to form $Fe^0$ at the (plating) substrate, causing the $Fe^{2+}$ to plate onto the negative electrode 26.

Discharge may be sustained while $Fe^0$ remains available to the negative electrolyte for oxidation and while $Fe^{3+}$ remains available in the positive electrolyte for reduction. As an example, $Fe^{3+}$ availability may be maintained by increasing a concentration or a volume of the positive electrolyte in the positive electrode compartment 22 side of the redox flow battery cell 18 to provide additional $Fe^{3+}$ ions via an external source, such as an external positive electrolyte chamber 52. More commonly, availability of $Fe^0$ during discharge may be an issue in IFB systems, wherein the $Fe^0$ available for discharge may be proportional to a surface area and a volume of the negative electrode substrate, as well as to a plating efficiency. Charge capacity may be dependent on the availability of $Fe^{2+}$ in the negative electrode compartment 20. As an example, $Fe^{2+}$ availability may be maintained by providing additional $Fe^{2+}$ ions via an external source, such as an external negative electrolyte chamber 50 to increase a concentration or a volume of the negative electrolyte to the negative electrode compartment 20 side of the redox flow battery cell 18.

In an IFB, the positive electrolyte may include ferrous iron, ferric iron, ferric complexes, or any combination thereof, while the negative electrolyte may include ferrous iron or ferrous complexes, depending on a state of charge (SOC) of the IFB system. As previously mentioned, utilization of iron ions in both the negative electrolyte and the positive electrolyte may allow for utilization of the same electrolytic species on both sides of the redox flow battery cell 18, which may reduce electrolyte cross-contamination and may increase the efficiency of the IFB system, resulting in less electrolyte replacement as compared to other redox flow battery systems.

Efficiency losses in an IFB may result from electrolyte crossover through a separator 24 (e. g., ion-exchange membrane barrier, microporous membrane, and the like). For example, $Fe^{3+}$ ions in the positive electrolyte may be driven toward the negative electrolyte by a $Fe^{3+}$ ion concentration gradient and an electrophoretic force across the separator 24. Subsequently, $Fe^{3+}$ ions penetrating the separator 24 and crossing over to the negative electrode compartment 20 may result in coulombic efficiency losses. $Fe^{3+}$ ions crossing over from the low pH redox side (e. g., more acidic positive electrode compartment 22) to the high pH plating side (e. g., less acidic negative electrode compartment 20) may result in precipitation of $Fe(OH)_3$. Precipitation of $Fe(OH)_3$ may degrade the separator 24 and cause permanent battery performance and efficiency losses. For example, $Fe(OH)_3$ precipitate may chemically foul an organic functional group of an ion-exchange membrane or physically clog micropores of the ion-exchange membrane. In either case, due to the $Fe(OH)_3$ precipitate, membrane ohmic resistance may rise over time and battery performance may degrade. Precipitate may be removed by washing the IFB with acid, but constant maintenance and downtime may be disadvantageous for commercial battery applications. Furthermore, washing may be dependent on regular preparation of electrolyte, contributing to additional processing costs and complexity. Alternatively, adding specific organic acids to the positive electrolyte and the negative electrolyte in response to electrolyte pH changes may mitigate precipitate formation during battery charge and discharge cycling without driving up overall costs. Additionally, implementing a membrane barrier that inhibits $Fe^{3+}$ ion crossover may also mitigate fouling.

Additional coulombic efficiency losses may be caused by reduction of $H^+$ (e. g., protons) and subsequent formation of $H_2$ gas, and a reaction of protons in the negative electrode compartment 20 with electrons supplied at the plated iron metal of the negative electrode 26 to form $H_2$ gas.

The IFB electrolyte (e. g., $FeCl_2$, $FeCl_3$, $FeSO_4$, $Fe_2(SO_4)_3$, and the like) may be readily available and may be produced at low costs. In one example, the IFB electrolyte may be formed from ferrous chloride ($FeCl_2$), potassium chloride (KCl), manganese(II) chloride ($MnCl_2$), and boric acid ($H_3BO_3$). The IFB electrolyte may offer higher reclamation value because the same electrolyte may be used for the negative electrolyte and the positive electrolyte, consequently reducing cross-contamination issues as compared to other systems. Furthermore, because of iron's electron configuration, iron may solidify into a generally uniform solid structure during plating thereof on the negative electrode substrate. For zinc and other metals commonly used in hybrid redox batteries, solid dendritic structures may form during plating. A stable electrode morphology of the IFB system may increase the efficiency of the battery in comparison to other redox flow batteries. Further still, iron redox flow batteries may reduce the use of toxic raw materials and may operate at a relatively neutral pH as compared to other redox flow battery electrolytes. Accordingly, IFB systems may reduce environmental hazards as compared with all other current advanced redox flow battery systems in production.

Continuing with FIG. 1, a schematic illustration of the redox flow battery system 10 is shown. The redox flow battery system 10 may include the redox flow battery cell 18 fluidly coupled to an integrated multi-chambered electrolyte storage tank 110. The redox flow battery cell 18 may include the negative electrode compartment 20, separator 24, and positive electrode compartment 22. The separator 24 may include an electrically insulating ionic conducting barrier which prevents bulk mixing of the positive electrolyte and the negative electrolyte while allowing conductance of specific ions therethrough. For example, and as discussed above, the separator 24 may include an ion-exchange membrane and/or a microporous membrane.

The negative electrode compartment 20 may include the negative electrode 26, and the negative electrolyte may include electroactive materials. The positive electrode compartment 22 may include the positive electrode 28, and the positive electrolyte may include electroactive materials. In some examples, multiple redox flow battery cells 18 may be combined in series or in parallel to generate a higher voltage or electric current in the redox flow battery system 10.

Further illustrated in FIG. 1 are negative and positive electrolyte pumps 30 and 32, both used to pump electrolyte solution through the redox flow battery system 10. Electrolytes are stored in one or more tanks external to the cell, and are pumped via the negative and positive electrolyte pumps 30 and 32 through the negative electrode compartment 20 side and the positive electrode compartment 22 side of the redox flow battery cell 18, respectively.

The redox flow battery system 10 may also include a first bipolar plate 36 and a second bipolar plate 38, each positioned along a rear-facing side, e. g., opposite of a side facing the separator 24, of the negative electrode 26 and the positive electrode 28, respectively. The first bipolar plate 36 may be in contact with the negative electrode 26 and the second bipolar plate 38 may be in contact with the positive electrode 28. In other examples, however, the bipolar plates 36 and 38 may be arranged proximate but spaced away from the electrodes 26 and 28 and housed within the respective electrode compartments 20 and 22. In either case, the bipolar plates 36 and 38 may be electrically coupled to the terminals 40 and 42, respectively, either via direct contact therewith or through the negative and positive electrodes 26 and 28, respectively.

The IFB electrolytes may be transported to reaction sites at the negative and positive electrodes 26 and 28 by the first and second bipolar plates 36 and 38, resulting from conductive properties of a material of the bipolar plates 36 and 38. Electrolyte flow may also be assisted by the negative and positive electrolyte pumps 30 and 32, facilitating forced convection through the redox flow battery cell 18. Reacted electrochemical species may also be directed away from the reaction sites by a combination of forced convection and a presence of the first and second bipolar plates 36 and 38.

As illustrated in FIG. 1, the redox flow battery cell 18 may further include the negative battery terminal 40 and the positive battery terminal 42. When a charge current is applied to the battery terminals 40 and 42, the positive electrolyte may be oxidized (loses one or more electrons) at the positive electrode 28, and the negative electrolyte may be reduced (gains one or more electrons) at the negative electrode 26. During battery discharge, reverse redox reactions may occur on the electrodes 26 and 28. In other words, the positive electrolyte may be reduced (gains one or more electrons) at the positive electrode 28, and the negative electrolyte may be oxidized (loses one or more electrons) at the negative electrode 26. An electrical potential difference across the battery may be maintained by the electrochemical redox reactions in the positive electrode compartment 22 and the negative electrode compartment 20, and may induce an electric current through a current collector while the reactions are sustained. An amount of energy stored by a redox battery may be limited by an amount of electroactive material available in electrolytes for discharge, depending on a total volume of electrolytes and a solubility of the electroactive materials.

The redox flow battery system 10 may further include the integrated multi-chambered electrolyte storage tank 110. The multi-chambered electrolyte storage tank 110 may be divided by a bulkhead 98. The bulkhead 98 may create multiple chambers within the multi-chambered electrolyte storage tank 110 so that both the positive and negative electrolytes may be included within a single tank. The negative electrolyte chamber 50 holds negative electrolyte including the electroactive materials, and the positive electrolyte chamber 52 holds positive electrolyte including the electroactive materials. The bulkhead 98 may be positioned within the multi-chambered electrolyte storage tank 110 to yield a desired volume ratio between the negative electrolyte chamber 50 and the positive electrolyte chamber 52. In one example, the bulkhead 98 may be positioned to set a volume ratio of the negative and positive electrolyte chambers 50 and 52 according to a stoichiometric ratio between the negative and positive redox reactions. FIG. 1 further illustrates a fill height 112 of the multi-chambered electrolyte storage tank 110, which may indicate a liquid level in each tank compartment.

FIG. 1 also shows a gas head space 90 located above the fill height 112 of the negative electrolyte chamber 50, and a gas head space 92 located above the fill height 112 of the positive electrolyte chamber 52. The gas head space 92 may be utilized to store $H_2$ gas generated through operation of the redox flow battery (e. g., due to proton reduction and iron corrosion side reactions) and conveyed to the multi-chambered electrolyte storage tank 110 with returning electrolyte from the redox flow battery cell 18. The $H_2$ gas may be separated spontaneously at a gas-liquid interface (e. g., the fill height 112) within the multi-chambered electrolyte storage tank 110, thereby precluding having additional gas-liquid separators as part of the redox flow battery system 10. Once separated from the electrolyte, the $H_2$ gas may fill the gas head spaces 90 and 92. As such, the stored $H_2$ gas may aid in purging other gases from the multi-chambered electrolyte storage tank 110, thereby acting as an inert gas blanket for reducing oxidation of electrolyte species, which may help to reduce redox flow battery capacity losses. In this way, utilizing the integrated multi-chambered electrolyte storage tank 110 may forego having separate negative and positive electrolyte storage tanks, hydrogen storage tanks, and gas-liquid separators common to conventional redox flow battery systems, thereby simplifying a system design, reducing a physical footprint of the redox flow battery system 10, and reducing system costs.

FIG. 1 also shows a spillover hole 96, which may create an opening in the bulkhead 98 between the gas head spaces 90 and 92, and may provide a means of equalizing gas pressure between the chambers 50 and 52. The spillover hole 96 may be positioned at a threshold height above the fill height 112. The spillover hole 96 may further enable a capability to self-balance the electrolytes in each of the negative and positive electrolyte chambers 50 and 52 in the event of a battery crossover. In the case of an all-iron redox flow battery system, the same electrolyte ($Fe^{2+}$) is used in both negative and positive electrode compartments 20 and 22, so spilling over of electrolyte between the negative and positive electrolyte chambers 50 and 52 may reduce overall system efficiency, but overall electrolyte composition, battery module performance, and battery module capacity may be maintained.

Flange fittings may be utilized for all piping connections for inlets and outlets to and from the multi-chambered electrolyte storage tank 110 to maintain a continuously pressurized state without leaks. The multi-chambered electrolyte storage tank 110 may include at least one outlet from each of the negative and positive electrolyte chambers 50 and 52, and at least one inlet to each of the negative and positive electrolyte chambers 50 and 52. Furthermore, one or more outlet connections may be provided from the gas head spaces 90 and 92 for directing $H_2$ gas to rebalancing cells 80 and 82, such that the rebalancing cells 80 and 82 may be respectively fluidically coupled to the gas head spaces 90 and 92. Electrolyte and $H_2$ gas may be circulating through the rebalancing cells 80 and 82 to maintain electrolyte health and battery capacity. The hydrogen gas flow architecture is expanded upon herein with regard to FIGS. 2A-2B, 4A-4B, and 5A-5B.

Although not shown in FIG. 1, the integrated multi-chambered electrolyte storage tank 110 may further include one or more heaters thermally coupled to each of the negative electrolyte chamber 50 and the positive electrolyte chamber 52. In alternate examples, only one of the negative and positive electrolyte chambers 50 and 52 may include one or more heaters. In the case where only the positive electrolyte chamber 52 includes one or more heaters, the negative electrolyte may be heated by transferring heat generated at the redox flow battery cell 18 to the negative electrolyte. In this way, the redox flow battery cell 18 may heat and facilitate temperature regulation of the negative electrolyte. The one or more heaters may be actuated by a controller 88 to regulate a temperature of the negative electrolyte chamber 50 and the positive electrolyte chamber 52 independently or together. For example, in response to an electrolyte temperature decreasing below a threshold temperature, the controller 88 may increase a power supplied to one or more heaters so that a heat flux to the electrolyte may be increased. The electrolyte temperature may be indicated by one or more temperature sensors mounted at the multi-chambered electrolyte storage tank 110, such as sensors 60 and 62.

As examples, the one or more heaters may include coil type heaters or other immersion heaters immersed in the electrolyte fluid, or surface mantle type heaters that transfer heat conductively through the walls of the negative and positive electrolyte chambers 50 and 52 to heat the fluid therein. Other known types of tank heaters may be employed without departing from the scope of the present disclosure. Furthermore, the controller 88 may deactivate the one or more heaters in the negative and positive electrolyte chambers 50 and 52 in response to a liquid level decreasing below a solids fill threshold level. Said in another way, in some examples, the controller 88 may activate the one or more heaters in the negative and positive electrolyte chambers 50 and 52 only in response to a liquid level increasing above the solids fill threshold level. In this way, activating the one or more heaters without sufficient liquid in the negative and/or positive electrolyte chambers 50, 52 may be averted, thereby reducing a risk of overheating or burning out the heater(s).

Further still, one or more inlet connections may be provided to each of the negative and positive electrolyte chambers 50 and 52 from a field hydration system. In this way, the field hydration system may facilitate commissioning of the redox flow battery system 10, including installing, filling, and hydrating the redox flow battery system 10, at an end-use location. Furthermore, prior to commissioning the redox flow battery system 10 at the end-use location, the redox flow battery system 10 may be dry-assembled at a battery manufacturing facility different from the end-use location without filling and hydrating the redox flow battery system 10, before delivering the redox flow battery system 10 to the end-use location. In one example, the end-use location may correspond to a location where the redox flow battery system 10 is to be installed and utilized for on-site energy storage. Said another way, the redox flow battery system 10 may be designed such that, once installed and hydrated at the end-use location, a position of the redox flow battery system 10 may become fixed, and the redox flow battery system 10 may no longer be deemed a portable, dry system. Thus, from a perspective of an end-user, the dry, portable redox flow battery system 10 may be delivered on-site, after which the redox flow battery system 10 may be installed, hydrated, and commissioned. Prior to hydration, the redox flow battery system 10 may be referred to as a dry, portable system, the redox flow battery system 10 being free of or without water and wet electrolyte. Once hydrated, the redox flow battery system 10 may be referred to as a wet, non-portable system, the redox flow battery system 10 including wet electrolyte.

Further illustrated in FIG. 1, electrolyte solutions primarily stored in the multi-chambered electrolyte storage tank 110 may be pumped via the negative and positive electrolyte pumps 30 and 32 throughout the redox flow battery system 10. Electrolyte stored in the negative electrolyte chamber 50 may be pumped via the negative electrolyte pump 30 through the negative electrode compartment 20 side of the redox flow battery cell 18, and electrolyte stored in the positive electrolyte chamber 52 may be pumped via the positive electrolyte pump 32 through the positive electrode compartment 22 side of the redox flow battery cell 18.

The electrolyte rebalancing cells 80 and 82 (e. g., reactors) may be connected in line or in parallel with the recirculating flow paths of the electrolyte at the negative and positive sides of the redox flow battery cell 18, respectively, in the redox flow battery system 10. One or more rebalancing reactors may be connected in-line with the recirculating flow paths of the electrolyte at the negative and positive sides of the battery, and other rebalancing reactors may be connected in parallel, for redundancy (e. g., a rebalancing reactor may be serviced without disrupting battery and rebalancing operations) and for increased rebalancing capacity. In one example, the electrolyte rebalancing cells 80 and 82 may be placed in a return flow path from the negative and positive electrode compartments 20 and 22 to the negative and positive electrolyte chambers 50 and 52, respectively. The electrolyte rebalancing cells 80 and 82 may serve to rebalance electrolyte charge imbalances in the redox flow battery system 10 occurring due to side reactions, ion crossover, and the like, as described herein.

As shown in FIG. 1 (and as further described with reference to FIGS. 7A and 7B), at least a portion of the liquid electrolyte pumped from the negative electrolyte chamber by the negative electrolyte pump 30 may be diverted upstream of the negative electrode compartment 20 to the rebalancing cell 80. An electrolyte flow control device 76 may be positioned between the negative electrolyte pump 30 and the rebalancing cell 80 to regulate the flow of electrolyte diverted to the rebalancing cell 80. Analogously, a portion of the liquid electrolyte pumped from the positive electrolyte chamber by the positive electrolyte pump 32 may be diverted upstream of the positive electrode compartment 22 to the rebalancing cell 82. An electrolyte flow control device 78 may be positioned between the positive electrolyte pump 32 and the rebalancing cell 82 to regulate the flow of electrolyte diverted to the rebalancing cell 82. Electrolyte flow control devices 76 and 78 are communicatively coupled to the controller 88. As such, the controller 88 may regulate a flow of electrolyte diverted by way of the electrolyte flow control devices 76 and 78 to the rebalancing cells 80 and 82, respectively. As further described with reference to FIGS. 9 and 10, the controller 88 may modulate the electrolyte flow control devices 76 and 78 to maintain a rebalancing reaction rate at the rebalancing cells 80 and 82.

In some examples, one or both of the rebalancing cells 80 and 82 may include trickle bed reactors, where the $H_2$ gas and the (liquid) electrolyte may be contacted at catalyst surfaces in a packed bed for carrying out the electrolyte rebalancing reaction. Additionally or alternatively, one or both of the rebalancing cells 80 and 82 may have catalyst beds configured in a jelly roll. In additional or alternative examples, one or both of the rebalancing cells 80 and 82 may include flow-through type reactors that are capable of contacting the $H_2$ gas and the electrolyte and carrying out the electrolyte rebalancing reactions absent a packed catalyst bed. However, lower $Fe^{3+}$ reduction rates (e. g., on the order of ~1-3 mol/m²hr) during electrolyte rebalancing may preclude implementation of such rebalancing reactor configurations in higher performance applications.

In other examples, one or both of the rebalancing cells 80 and 82 may include fuel cells, where the $H_2$ gas and the electrolyte may be contacted at catalyst surfaces for carrying out the electrolyte rebalancing reaction and where a closed circuit may be formed by directing electric current from the fuel cells through an external load. However, reverse current spikes (e. g., transient increases in reverse electric current, where "reverse electric current" may be used herein to refer to any electric current traveling along an electrical pathway in a direction opposite from expected (that is, opposite from a "forward" direction)) in such fuel cells may be unavoidable in certain circumstances, undermining a reliability of such rebalancing reaction configurations.

To increase the $Fe^{3+}$ reduction rate without sacrificing an overall reliability of the rebalancing cells 80 and 82, embodiments of the present disclosure provide a rebalancing cell, such as the rebalancing cell of FIGS. 2A and 2B, including a stack of internally shorted electrode assemblies, such as the electrode assembly of FIG. 3, configured to drive the $H_2$ gas and the electrolyte to react at catalyst surfaces via a combination of internal electric current, convection, gravity feeding, and capillary action. In embodiments described herein, the electrode assemblies of the stack of internally shorted electrode assemblies may be referred to as "internally shorted," in that no electric current may be directed away from the stack of internally shorted electrode assemblies during operation of the rebalancing cell. Such internal electrical shorting may reduce or obviate reverse current spikes while drastically increasing the $Fe^{3+}$ reduction rate (e. g., to as high as -50-70 mol/m²hr) and concomitantly decreasing side reaction rates (e. g., rates of the reactions of equation (1)-(3)). Further, each electrode assembly of the stack of internally shorted electrode assemblies may be electrically decoupled from each other electrode assembly of the stack of internally shorted electrode assemblies, such that degradation to the stack of internally shorted electrode assemblies during current spikes at one electrode assembly may be limited thereto (e. g., reverse electric current may not be driven from one electrode assembly through the other electrode assemblies). In such cases, the single, degraded electrode assembly may be easily removed from the stack of internally shorted electrode assemblies and replaced with a non-degraded electrode assembly.

To realize the internally shorted circuit, each electrode assembly of the stack of internally shorted electrode assemblies may include an interfacing pair of positive and negative electrodes (e. g., configured in face-sharing contact with one another so as to be continuously electrically conductive). As used herein, a pair of first and second components (e. g., positive and negative electrodes of an electrode assembly) may be described as "interfacing" with one another when the first component is arranged adjacent to the second component such that the first and second components are in face-sharing contact with one another (where "adjacent" is used herein to refer to any two components having no intervening components therebetween). Further, as used herein, "continuously" when describing electrical conductivity of multiple electrodes may refer to an electrical pathway therethrough having effectively or practically zero resistance at any face-sharing interfaces of the multiple electrodes.

In an exemplary embodiment, the (positive) rebalancing cell 82 may be the rebalancing cell including the stack of internally shorted electrode assemblies. Higher $Fe^{3+}$ reduction rates may be desirable to rebalance the positive electrolyte, as significant amounts of $Fe^{3+}$ may be generated at the positive electrode 28 during battery charging (see equation (6)). In additional or alternative embodiments, the (negative) rebalancing cell 80 may be of like configuration [$Fe^{3+}$ may be generated at the negative electrode 26 during iron plating oxidation (see equation (3))].

During operation of the redox flow battery system 10, sensors and probes may monitor and control chemical properties of the electrolyte such as electrolyte pH, concentration, SOC, and the like. For example, as illustrated in FIG. 1, sensors 62 and 60 maybe be positioned to monitor positive electrolyte and negative electrolyte conditions at the positive electrolyte chamber 52 and the negative electrolyte chamber 50, respectively. In another example, sensors 62 and 60 may each include one or more electrolyte level sensors to indicate a level of electrolyte in the positive electrolyte chamber 52 and the negative electrolyte chamber 50, respectively. As another example, sensors 72 and 70, also illustrated in FIG. 1, may monitor positive electrolyte and negative electrolyte conditions at the positive electrode compartment 22 and the negative electrode compartment 20, respectively. The sensors 72 and 70 may be pH probes, optical probes, pressure sensors, voltage sensors, etc. It will be appreciated that sensors may be positioned at other locations throughout the redox flow battery system 10 to monitor electrolyte chemical properties and other properties.

For example, a sensor may be positioned in an external acid tank to monitor acid volume or pH of the external acid tank, wherein acid from the external acid tank may be supplied via an external pump to the redox flow battery system 10 in order to reduce precipitate formation in the electrolytes. Additional external tanks and sensors may be installed for supplying other additives to the redox flow battery system 10. For example, various sensors including, temperature, conductivity, and level sensors of a field hydration system may transmit signals to the controller 88. Furthermore, the controller 88 may send signals to actuators such as valves and pumps of the field hydration system during hydration of the redox flow battery system 10. Sensor information may be transmitted to the controller 88 which may in turn actuate the pumps 30 and 32 to control electrolyte flow through the redox flow battery cell 18, or to perform other control functions, as an example. In this manner, the controller 88 may be responsive to one or a combination of sensors and probes.

The redox flow battery system 10 may further include a source of $H_2$ gas. In one example, the source of $H_2$ gas may include a separate dedicated hydrogen gas storage tank. In the example of FIG. 1, $H_2$ gas may be stored in and supplied from the integrated multi-chambered electrolyte storage tank 110. The integrated multi-chambered electrolyte storage tank 110 may supply additional $H_2$ gas to the positive electrolyte chamber 52 and the negative electrolyte chamber 50. The integrated multi-chambered electrolyte storage tank 110 may alternately and/or additionally supply additional $H_2$ gas to an inlet of the electrolyte rebalancing cells 80 and 82. As an example, hydrogen gas flow control devices 66 and 68, which are communicatively coupled to and controlled by the controller 88, may regulate flow of the $H_2$ gas from the integrated multi-chambered electrolyte storage tank 110 to the rebalancing cells 80 and 82, respectively. As shown in FIG. 1 (and further described with reference to FIGS. 7A and 7B), the hydrogen gas flow control devices 66 and 68 may be fluidly coupled between the gas head spaces 90 and 92 of the multi-chambered electrolyte storage tank 110 and the rebalancing cells 80 and 82, respectively. As further described with reference to FIGS. 9 and 10, the controller 88 may modulate the hydrogen gas flow control devices 66 and 68 to maintain a rebalancing reaction rate at the rebalancing reactors 80 and 82.

The integrated multi-chambered electrolyte storage tank 110 may supplement the $H_2$ gas generated in the redox flow battery system 10. For example, when gas leaks are detected in the redox flow battery system 10 or when a reduction reaction rate (e. g., the $Fe^{3+}$ reduction rate) is too low at low hydrogen partial pressure, the $H_2$ gas may be supplied from the integrated multi-chambered electrolyte storage tank 110 in order to rebalance the SOC of the electroactive materials in the positive electrolyte and the negative electrolyte. As an example, the controller 88 may supply the $H_2$ gas from the integrated multi-chambered electrolyte storage tank 110 in response to a measured change in pH or in response to a measured change in SOC of an electrolyte or an electroactive material.

For example, an increase in pH of the negative electrolyte chamber 50, or the negative electrode compartment 20, may indicate that $H_2$ gas is leaking from the redox flow battery system 10 and/or that the reaction rate is too slow with the available hydrogen partial pressure, and the controller 88, in response to the pH increase, may increase a supply of $H_2$ gas from the integrated multi-chambered electrolyte storage tank 110 to the redox flow battery system 10. As a further example, the controller 88 may supply $H_2$ gas from the integrated multi-chambered electrolyte storage tank 110 in response to a pH change, wherein the pH increases beyond a first threshold pH or decreases beyond a second threshold pH. In the case of an IFB, the controller 88 may supply additional $H_2$ gas to increase a rate of reduction of $Fe^{3+}$ ions and a rate of production of protons, thereby reducing the pH of the positive electrolyte. Furthermore, the pH of the negative electrolyte may be lowered by hydrogen reduction of $Fe^{3+}$ ions crossing over from the positive electrolyte to the negative electrolyte or by protons, generated at the positive side, crossing over to the negative electrolyte due to a proton concentration gradient and electrophoretic forces. In this manner, the pH of the negative electrolyte may be maintained within a stable region, while reducing the risk of precipitation of $Fe^{3+}$ ions (crossing over from the positive electrode compartment 22) as $Fe(OH)_3$.

Other control schemes for controlling a supply rate of $H_2$ gas from the integrated multi-chambered electrolyte storage tank 110 responsive to a change in an electrolyte pH or to a change in an electrolyte SOC, detected by other sensors such as an oxygen-reduction potential (ORP) meter or an optical sensor, may be implemented. Further still, the change in pH or SOC triggering action of the controller 88 may be based on a rate of change or a change measured over a time period. The time period for the rate of change may be predetermined or adjusted based on time constants for the redox flow battery system 10. For example, the time period may be reduced if a recirculation rate is high, and local changes in concentration (e. g., due to side reactions or gas leaks) may quickly be measured since the time constants may be small.

The controller 88 may further execute control schemes based on an operating mode of the redox flow battery system 10. For example, and as discussed in detail below with reference to FIGS. 9 and 10, in tandem with controlling flow of the $H_2$ gas to the rebalancing cells 80 and 82 as described above, the controller 88 may control flows of the negative and positive electrolytes to the rebalancing cells 80 and 82, respectively, during charging and discharging of the redox flow battery cell 18 so as to simultaneously reduce excess concentrations of $H_2$ gas and $Fe^{3+}$ ion in the redox flow battery system. After electrolyte rebalancing, the controller 88 may direct flow of any excess or unreacted $H_2$ along with the rebalanced negative and positive electrolytes (e. g., including a decreased concentration of $Fe^{3+}$ and an increased concentration of $Fe^{2+}$) from the rebalancing cells 80 and 82 back into the respective electrolyte chambers 50 and 52 of the multi-chambered electrolyte storage tank 110. Additionally or alternatively, the unreacted $H_2$ gas may be returned to the separate dedicated hydrogen gas storage tank.

As another example, the controller 88 may further control charging and discharging of the redox flow battery cell 18 so as to cause iron preformation at the negative electrode 26 during system conditioning (where system conditioning may include an operating mode employed to optimize electrochemical performance of the redox flow battery system 10 outside of battery cycling). That is, during system conditioning, the controller 88 may adjust one or more operating conditions of the redox flow battery system 10 to plate iron metal on the negative electrode 26 to increase a battery charge capacity during subsequent battery cycling (thus, the iron metal may be preformed for battery cycling). In this way, preforming iron at the negative electrode 26 and running electrolyte rebalancing during the system conditioning may increase an overall capacity of the redox flow battery cell 18 during battery cycling by mitigating iron plating loss. As used herein, battery cycling (also referred to as "charge cycling") may include alternating between a charging mode and a discharging mode of the redox flow battery system 10.

It will be appreciated that all components apart from the sensors 60 and 62 and the integrated multi-chambered electrolyte storage tank 110 (and components included therein) may be considered as being included in a power module 120. As such, the redox flow battery system 10 may be described as including the power module 120 fluidly coupled to the integrated multi-chambered electrolyte storage tank 110 and communicably coupled to the sensors 60 and 62. In some examples, each of the power module 120 and the multi-chambered electrolyte storage tank 110 may be included in a single housing or packaging, such that the redox flow battery system 10 may be contained as a single unit in a single location. It will further be appreciated the positive electrolyte, the negative electrolyte, the sensors 60 and 62, the electrolyte rebalancing cells 80 and 82, and the integrated multi-chambered electrolyte storage tank 110 (and components included therein) may be considered as being included in an electrolyte subsystem 130. As such, the electrolyte subsystem 130 may supply one or more electrolytes to the redox flow battery cell 18 (and components included therein).

Referring now to FIGS. 2A and 2B, perspective views are respectively shown, each of the perspective views depicting a rebalancing cell 202 for a redox flow battery system, such as redox flow battery system 10 of FIG. 1. In an exemplary embodiment, the rebalancing cell 202 may include a stack of internally shorted electrode assemblies, such as the electrode assembly described in detail below with reference to FIG. 3, which may drive an electrolyte rebalancing reaction by promoting contact between $H_2$ gas and an electrolyte from positive or negative electrode compartments of a redox flow battery, such as the redox flow battery cell 18 of FIG. 1, at catalytic surfaces of negative electrodes of the stack of internally shorted electrode assemblies. Accordingly, the rebalancing cell 202 may be one or both of the rebalancing cells 80 and 82 of FIG. 1.

A set of reference axes 250 is provided for describing relative positioning of the components shown and for comparison between the views of FIGS. 2A-5B, the axes 250 indicating an x-axis, a y-axis, and a z-axis. As further shown in dashing in FIGS. 2A and 2B, an additional axis g may be parallel with a direction of gravity (e. g., in a positive direction along the axis g) and a vertical direction (e. g., in a negative direction along the axis g and opposite to the direction of gravity).

A number of rebalancing cells 202 included in the redox flow battery system and a number of electrode assemblies included in the stack of internally shorted electrode assemblies are not particularly limited and may increase to accommodate correspondingly higher performance applications. For example, a 75 kW redox flow battery system may include two rebalancing cells 202 including a stack of 20 electrode assemblies (e. g., a stack of 19 bipolar assemblies with 2 end plates positioned at opposite ends of the stack).

As shown, the stack of internally shorted electrode assemblies may be removably enclosed within an external cell enclosure (e. g., housing) 204. Accordingly, in some examples, the cell enclosure 204 may include a top cover removably affixed to an enclosure base, such that the top cover may be temporarily removed to replace or diagnose one or more electrode assemblies of the stack of internally shorted electrode assemblies. In additional or alternative examples, the cell enclosure 204, depicted in FIGS. 2A and 2B as a rectangular prism, may be molded to be clearance fit against other components of the redox flow battery system such that the rebalancing cell 202 may be in face-sharing contact with such components. In some examples, the cell enclosure 204 may be composed of a material having a low electrical conductivity, such as a plastic or other polymer, so as to reduce undesirable shorting events.

The cell enclosure 204 may further be configured to include openings or cavities for interfacial components of the rebalancing cell 202. For example, the cell enclosure 204 may include a plurality of inlet and outlet ports configured to fluidically couple to other components of the redox flow battery system. In one example, and as shown, the plurality of inlet and outlet ports may include polypropylene (PP) flange fittings fusion welded to PP plumbing.

In an exemplary embodiment, the plurality of inlet and outlet ports may include an electrolyte inlet port 206 for flowing the electrolyte into the cell enclosure 204 and electrolyte outlet ports 208 for expelling the electrolyte from the cell enclosure 204. The electrolyte inlet and outlet ports may be referred to as positive inlet and outlet ports due to the cell chemistry.

In one example, the electrolyte inlet port 206 may be positioned on an upper half of the cell enclosure 204 and the electrolyte outlet ports 208 may be positioned on a lower half of the cell enclosure 204 (where the upper half and the lower half of the cell enclosure 204 are separated along the z-axis by a plane parallel with each of the x- and y-axes). Accordingly, the electrolyte outlet ports 208 may be positioned lower than the electrolyte inlet port 206 with respect to the direction of gravity (e. g., along the axis g).

Specifically, upon the electrolyte entering the cell enclosure 204 via the electrolyte inlet port 206, the electrolyte may be distributed across the stack of internally shorted electrode assemblies, gravity fed through the stack of electrode assemblies, wicked up (e. g., against the direction of gravity) through positive electrodes of the stack of internally shorted electrode assemblies to react at the catalytic surfaces of the negative electrodes in a cathodic half reaction, and expelled out of the cell enclosure 204 via the electrolyte outlet ports 208. To assist in the gravity feeding of the electrolyte and increase a pressure drop thereof, the rebalancing cell 202 may further be tilted or inclined with respect to the direction of gravity via a sloped support 220 coupled to the cell enclosure 204. In some examples, tilting of the cell enclosure 204 in this way may further assist in electrolyte draining of the rebalancing cell 202 (e. g., during an idle mode of the redox flow battery system) and keep the catalytic surfaces relatively dry (as the catalytic surfaces may corrode after being soaked in the electrolyte for a sufficient duration, in some examples).

As shown, the sloped support 220 may tilt the cell enclosure 204 at an angle 222 such that planes of electrode sheets of the stack of internally shorted electrode assemblies are inclined with respect to a lower surface on which the sloped support 220 rests, at the angle 222. In some examples, the angle 222 (e. g., of the cell enclosure 204 with respect to the lower surface) may be between 0° and 30°. In embodiments wherein the angle 222 is substantially 0°, the rebalancing cell 202 may still function, though tilting the cell enclosure 204 by an angle greater than 0° may allow the pressure drop to be greater and for electrolyte crossover to the negative electrodes to be reduced. In some examples, the angle 222 may be between 2° and 30°. In some examples, the angle 222 may be between 2° and 20°. In one example, the angle 222 may be about 8°. Accordingly, the pressure drop of the electrolyte upon entering the cell enclosure 204, e. g., through the electrolyte inlet port 206, may be increased by increasing the angle 222 and decreased by decreasing the angle 222.

Additionally or alternatively, one or more support rails 224 may be coupled to the upper half of the cell enclosure 204 (e. g., opposite from the sloped support 220). In some examples, and as shown in the perspective view of FIG. 2A, the one or more support rails 224 may be tilted with respect to the cell enclosure 204 at the angle 222 such that the one or more support rails 224 may removably fasten the rebalancing cell 202 to an upper surface above and parallel with the lower surface. In this way, and based on geometric considerations, the z-axis may likewise be offset from the axis g at the angle 222 (e. g., the cell enclosure 204 may be tilted with respect to a vertical direction opposite the direction of gravity by the angle 222, as shown in FIGS. 2A and 2B). In some examples, gravity feeding of the electrolyte through the rebalancing cell 202 may further be assisted by positioning the rebalancing cell 202 above an electrolyte storage tank (e. g., the multi-chambered electrolyte storage tank 110 of FIG. 1) of the redox flow battery system with respect to the vertical direction opposite to the direction of gravity.

As further shown, the electrolyte outlet ports 208 may include a plurality of openings in the cell enclosure 204 configured to expel at least a portion of the electrolyte (each of the plurality of openings including the PP flange fitting fusion welded to PP plumbing). For instance, in FIGS. 2A and 2B, the electrolyte outlet ports 208 is shown including five openings. In this way, the electrolyte may be evenly distributed across the stack of internally shorted electrode assemblies and may be expelled from the cell enclosure 204 with substantially unimpeded flow ("substantially" may be used herein as a qualifier meaning "effectively"). In other examples, the electrolyte outlet ports 208 may include more than five openings or less than five openings. In one example, the electrolyte outlet ports 208 may include a single opening. In additional or alternative examples, the electrolyte outlet ports 208 may be positioned beneath the cell enclosure 204 with respect to the z-axis (e. g., on a face of the cell enclosure 204 facing a negative direction of the z-axis).

The electrolyte inlet port 206 and the electrolyte outlet ports 208 may be positioned on the cell enclosure 204 based on a flow path of the electrolyte through the stack of internally shorted electrode assemblies (e. g., from the electrolyte inlet port 206 to the electrolyte outlet ports 208 and inclusive of channels, passages, manifolds, plenums, wells, etc. within the cell enclosure 204 fluidically coupled to the electrolyte inlet port 206 and the electrolyte outlet ports 208). In some examples, and as shown, the electrolyte inlet port 206 and the electrolyte outlet ports 208 may be positioned on adjacent sides of the cell enclosure 204 (e. g., faces of the cell enclosure 204 sharing a common edge). In other examples, the electrolyte inlet port 206 and the electrolyte outlet ports 208 may be positioned on opposite sides of the cell enclosure 204. In other examples, the electrolyte inlet port 206 and the electrolyte outlet ports 208 may be positioned on the same side of the cell enclosure 204.

In some examples, the electrolyte inlet port 206 may be positioned on a face of the cell enclosure 204 facing a negative direction of the x-axis. In additional or alternative examples, the electrolyte inlet port 206 may be positioned on a face of the cell enclosure 204 facing a positive direction of the x-axis. In one example, and as shown, one opening of the electrolyte inlet port 206 may be positioned on the face of the cell enclosure 204 facing the negative direction of the x-axis and another opening of the electrolyte inlet port 206 may be positioned on the face of the cell enclosure 204 facing the positive direction of the x-axis.

In some examples, the plurality of inlet and outlet ports may further include a hydrogen gas inlet port 210 for flowing the $H_2$ gas into the cell enclosure 204 and a hydrogen gas outlet port 212 (as shown in FIG. 2B) for expelling the $H_2$ gas from the cell enclosure 204. The hydrogen gas inlet and outlet ports may be referred to as negative inlet and outlet ports due to cell chemistry.

In one example, and as shown, each of the hydrogen gas inlet port 210 and the hydrogen gas outlet port 212 may be positioned on the lower half of the cell enclosure 204 (e. g., at a lowermost electrode assembly of the stack of internally shorted electrode assemblies along the z-axis). In another example, each of the hydrogen gas inlet port 210 and the hydrogen gas outlet port 212 may be positioned on the upper half of the cell enclosure 204 (e. g., at an uppermost electrode assembly of the stack of internally shorted electrode assemblies along the z-axis). In yet another example, the hydrogen gas inlet port 210 may be positioned on the lower half of the cell enclosure 204 and the hydrogen gas outlet port 212 may be positioned on the upper half of the cell enclosure 204. In such an example, the hydrogen gas inlet port 210 may be positioned lower than the hydrogen gas outlet port 212 with respect to the direction of gravity (e. g., along the axis g).

Specifically, upon the $H_2$ gas entering the cell enclosure 204 via the hydrogen gas inlet port 210, the $H_2$ gas may be distributed across and through the stack of internally shorted electrode assemblies via forced convection (e. g., induced by flow field configurations of respective flow field plates) and decomposed at the catalytic surfaces of the negative electrodes in an anodic half reaction. However, in some examples, excess, unreacted $H_2$ gas may remain in the rebalancing cell 202 following contact with the catalytic surfaces. In some examples, at least a portion of the $H_2$ gas which has not reacted at the catalytic surfaces may pass into the electrolyte. To avoid undesirable pressure buildup and thereby prevent electrolyte pooling on the positive electrodes and concomitant electrolyte flooding of the negative electrodes in such examples, the plurality of inlet and outlet ports may further include a hydrogen gas relief port 214 (as shown in FIG. 2A) to expel unreacted $H_2$ gas from the electrolyte. The hydrogen gas relief port 214 may specifically receive hydrogen that has travel through the electrolyte and therefore may be referred to as a positive side hydrogen relief port 214 may specifically receive hydrogen that has travel through the electrolyte and therefore may be referred to as a positive side hydrogen relief port.

Further, in some examples, the hydrogen gas outlet port 212 may be configured to expel at least a portion of the $H_2$ gas which has not reacted at the catalytic surfaces and that has not flowed through the negative electrodes into the electrolyte. Further aspects of the $H_2$ gas flow will be discussed in greater detail below with reference to FIGS. 4A-5B.

The hydrogen gas inlet port 210 and the hydrogen gas outlet port 212 may be positioned on the cell enclosure 204 based on a flow path of the $H_2$ gas through the stack of internally shorted electrode assemblies. For example, the flow path may be from the hydrogen gas inlet port 210 to the hydrogen gas outlet port 212 (when included) and inclusive of channels, passages, manifolds, plenums, etc. , within the cell enclosure 204 and fluidically coupled to the hydrogen gas inlet port 210 and the hydrogen gas outlet port 212 (when included). In some examples, and as shown, the hydrogen gas inlet port 210 and the hydrogen gas outlet port 212 may be positioned on opposite sides of the cell enclosure 204. In other examples, the hydrogen gas inlet port 210 and the hydrogen gas outlet port 212 may be positioned on adjacent sides of the cell enclosure 204. In other examples, the hydrogen gas inlet port 210 and the hydrogen gas outlet port 212 may be positioned on the same side of the cell enclosure 204. Further, though the hydrogen gas inlet port 210 is shown in FIGS. 2A and 2B as being positioned on the face of the cell enclosure 204 facing the negative direction of the x-axis and the hydrogen gas outlet port 212 is shown in FIGS. 2A and 2B as being positioned on the face of the cell enclosure 204 facing the positive direction of the x-axis, in other examples, the hydrogen gas inlet port 210 may be positioned on the face of the cell enclosure 204 facing the positive direction of the x-axis and the hydrogen gas outlet port 212 may be positioned on the face of the cell enclosure 204 facing the negative direction of the x-axis.

In one example, the hydrogen gas inlet port 210, the hydrogen gas outlet port 212, the electrolyte inlet port 206, and the electrolyte outlet ports 208 may be positioned on the cell enclosure 204 in a crosswise configuration. The crosswise configuration may include the hydrogen gas outlet port 212 and the electrolyte inlet port 206 being positioned on different sides (e. g., faces) of the upper half of the cell enclosure 204 and the hydrogen gas inlet port 210 and the electrolyte outlet ports 208 being positioned on different sides of the lower half of the cell enclosure 204.

In other examples, the hydrogen gas outlet port 212 may be closed, omitted, or otherwise inhibited from expelling $H_2$ gas which has not reacted at the catalytic surfaces of the negative electrodes and which has not flowed through the negative electrodes into the electrolyte. In such examples, however, the hydrogen gas relief port 214 for expelling unreacted $H_2$ gas from the electrolyte may still be present, and the unreacted $H_2$ gas may only be expelled from the cell enclosure 204 after flowing through the negative electrodes into the electrolyte and through the hydrogen gas relief port 214. Exemplary rebalancing cell configurations lacking the hydrogen gas outlet port 212, whether or not including the hydrogen gas relief port 214, may be referred to as "dead ended configurations." In dead ended configurations, substantially all of the $H_2$ gas may be forced into contact with the catalytic surfaces of the negative electrodes, whereat the $H_2$ gas may either decompose via the anodic half reaction and/or the $H_2$ gas may enter the electrolyte after passing through the negative electrodes (e. g., without reacting at catalytic surfaces thereof).

The rebalancing cell 202 depicted in FIGS. 2A and 2B may operate with a comparatively small pressure gradient between the negative (hydrogen, higher pressure) and the positive (electrolyte, lower pressure) sides of the cell. As the cell is internally shorted, gravity and a higher hydrogen gas pressure keeps the electrolyte from flooding the negative channels in the cells.

Referring now to FIG. 3, an exploded view of an electrode assembly 302 for a rebalancing cell, such as the rebalancing cell 202 of FIGS. 2A and 2B, is shown. Accordingly, the electrode assembly 302 may be internally shorted (e. g., electric current flowing through the electrode assembly 302 is not channeled through an external load). In an exemplary embodiment, the electrode assembly 302 may be included in a stack of electrode assemblies of like configuration in a cell enclosure so as to form the rebalancing cell. The electrode assembly 302 may include a plate 304 with an activated carbon foam 306, a positive electrode 308 (also referred to herein as a "cathode" in certain examples), and a negative electrode 310 (also referred to herein as an "anode" in certain examples) sequentially stacked thereon. The electrode assembly 302 may be positioned within the rebalancing cell so as to receive an electrolyte through the carbon foam 306, wherefrom the electrolyte may enter pores of the positive electrode 308 via capillary action and come into contact with the negative electrode 310. The electrode assembly 302 may further be positioned within the rebalancing cell so as to receive $H_2$ gas across a catalytic surface of the negative electrode 310 opposite to the positive electrode 308 via convection. The convection of the $H_2$ gas across the catalytic surface may be assisted by a flow field plate interfacing with the catalytic surface. Upon decomposition of the $H_2$ gas at the catalytic surface via an anodic half reaction, protons and electrons may flow to an interface of the negative electrode 310 and the positive electrode 308, whereat ions in the electrolyte may be reduced via a cathodic half reaction (e. g., $Fe^{3+}$ may be reduced to $Fe^{2+}$). In this way, the electrode assembly 302 may be configured for electrolyte rebalancing for a redox flow battery, such as the redox flow battery cell 18 of FIG. 1, fluidically coupled to the rebalancing cell including the electrode assembly 302.

In some examples, the plate 304 may be composed of a material having a low electrical conductivity, such as a plastic or other polymer, so as to reduce undesirable shorting events. Accordingly, in one example, the plate 304 may be formed from the same material as the cell enclosure 204 of FIGS. 2A and 2B.

As shown, the plate 304 may include a plurality of inlets and outlets therethrough. For example, the plurality of inlets and outlets may include an electrolyte outlet channel section 316, a hydrogen gas inlet channel section 318a, and a hydrogen gas outlet channel section 318b. Specifically, the plate 304 may include the electrolyte outlet channel section 316 for directing the electrolyte out of the rebalancing cell, the hydrogen gas inlet channel section 318a for directing the $H_2$ gas into the rebalancing cell and across the negative electrode 310, and the hydrogen gas outlet channel section 318b for directing the $H_2$ gas out of the rebalancing cell. The plate 304 may further include an electrolyte inlet well 312 for receiving the electrolyte at the electrode assembly 302, the electrolyte inlet well 312 fluidically coupled to a plurality of electrolyte inlet passages 314a set into a berm 314b positioned adjacent to the carbon foam 306 for distributing the received electrolyte across the carbon foam 306. In some examples, the electrolyte inlet well 312 may receive the electrolyte from an electrolyte inlet port (e. g., the electrolyte inlet port 206 of FIGS. 2A and 2B) fluidically coupled thereto (e. g., via an electrolyte inlet channel), the electrolyte outlet channel section 316 may expel the electrolyte through an electrolyte outlet port (e. g., the electrolyte outlet ports 208 of FIGS. 2A and 2B) fluidically coupled thereto, the hydrogen gas inlet channel section 318a may receive the $H_2$ gas from a hydrogen gas inlet port (e. g., the hydrogen gas inlet port 210 of FIGS. 2A and 2B) fluidically coupled thereto, and the hydrogen gas outlet channel section 318b may expel the $H_2$ gas through a hydrogen gas outlet port (e. g., the hydrogen gas outlet port 212 of FIGS. 2A and 2B) fluidically coupled thereto.

It will be appreciated that, though the hydrogen gas inlet channel section 318a is described herein as a section of a hydrogen gas inlet channel and the hydrogen gas outlet channel section 318b is described herein as a section of a hydrogen gas outlet channel, in other examples, the channel section 318b may be a section of a hydrogen gas inlet channel (e. g., for directing the $H_2$ gas into the rebalancing cell and across the negative electrode 310 after receiving the $H_2$ gas from the hydrogen gas inlet port) and the gas inlet channel section 318a may be a section of a hydrogen gas outlet channel (e. g., for directing the $H_2$ gas out of the rebalancing cell by expelling the $H_2$ gas through the hydrogen gas outlet port). In other examples, the rebalancing cell may be configured as a dead ended configuration and no hydrogen gas outlet port may be fluidically coupled to the hydrogen gas outlet channel section 318b. In such examples, the hydrogen gas outlet channel section 318b may direct the $H_2$ gas back across the negative electrode 310 or the hydrogen gas outlet channel section 318b may instead be configured as another hydrogen gas inlet channel section (e. g., for directing a portion of the $H_2$ gas into the rebalancing cell and across the negative electrode 310 after receiving the portion of the $H_2$ gas from the hydrogen gas inlet port).

The plurality of inlets and outlets may be configured to ease electrolyte and $H_2$ gas flow throughout the rebalancing cell. As an example, a size of each of the hydrogen gas inlet channel section 318a and the hydrogen gas outlet channel section 318b may be selected to minimize a pressure drop therethrough, thereby aiding in flow distribution into each electrode assembly 302 of the stack of internally shorted electrode assemblies. As another example, a size of each electrolyte inlet passage 314a and a total number of the plurality of electrolyte inlet passages 314a relative to the berm 314b may be selected to induce a relatively small pressure drop to substantially evenly distribute electrolyte flow. In such an example, the selection of the size of each electrolyte inlet passage 314a and the total number of the plurality of electrolyte inlet passages 314a may be dependent on a number of factors specific to a given configuration of the rebalancing cell, such as a size of an electrolyte flow field and a desired electrolyte flow rate.

In additional or alternative examples, the electrolyte outlet channel section 316 may further be configured for distributing the electrolyte through multiple openings included in the electrolyte outlet port. For instance, in the exploded view of FIG. 3, the electrolyte outlet channel section 316 is shown including two openings. In some examples, a number of openings included in the electrolyte outlet channel section 316 may be equal to a number of openings included in the electrolyte outlet port, such that the openings of the electrolyte outlet channel section 316 may respectively correspond to the openings of the electrolyte outlet port. In this way, the electrolyte may be evenly distributed across the electrode assembly 302 and may be expelled from the rebalancing cell with substantially unimpeded flow. In other examples, the electrolyte outlet channel section 316 may include more than two openings or less than two openings (e. g., a single opening).

Further, when the electrode assembly 302 is included in a stack of electrode assemblies, electrolyte outlet channel sections 316, hydrogen gas inlet channel sections 318a, and hydrogen gas outlet channel sections 318b may align to form a continuous electrolyte outlet channel, a continuous hydrogen gas inlet channel, and a continuous hydrogen gas outlet channel, respectively (as variously shown in FIGS. 4A, 4B, 5A, and 5B, described below). In this way, the stack of electrode assemblies may be formed in a modular fashion, whereby any practical number of electrode assemblies 302 may be stacked and included in a rebalancing cell.

As further shown, a plurality of sealing inserts may be affixed (as used herein, "affix," "affixed," or "affixing" includes, but is not limited to, gluing, attaching, connecting, fastening, joining, linking, or securing one component to another component through a direct or indirect relationship) or otherwise coupled to the plate 304. As an example, the plurality of sealing inserts may include a hydrogen gas inlet channel seal insert 320a and a hydrogen gas outlet channel seal insert 320b for inducing flow of the $H_2$ gas across the negative electrode 310 by mitigating $H_2$ gas bypass. Specifically, the hydrogen gas inlet channel seal insert 320a and the hydrogen gas outlet channel seal insert 320b may be affixed or otherwise coupled adjacent to the hydrogen gas inlet channel section 318a and the hydrogen gas outlet channel section 318b, respectively, on a side of the plate 304 including the carbon foam 306, the positive electrode 308, and the negative electrode 310. In some examples, and as discussed in greater detail with reference to FIGS. 4A and 4B, the hydrogen gas inlet channel seal insert 320a and the hydrogen gas outlet channel seal insert 320b may be coincident with an x-y plane of the negative electrode 310 such that the hydrogen gas inlet channel seal insert 320a and the hydrogen gas outlet channel seal insert 320b may extend from a locus of affixation or coupling with the plate 304 and partially overlap the positive electrode 308.

As another example, the plurality of sealing inserts may further include each of a hydrogen gas inlet channel O-ring 322a and a hydrogen gas outlet channel O-ring 322b for respectively sealing an interface of the hydrogen gas inlet channel section 318a with a hydrogen gas inlet channel section of another electrode assembly and an interface of the hydrogen gas outlet channel section 318b with a hydrogen gas outlet channel section of another electrode assembly. Specifically, the hydrogen gas inlet channel O-ring 322a and the hydrogen gas outlet channel O-ring 322b may be affixed or otherwise coupled to the plate 304 so as to respectively circumscribe the hydrogen gas inlet channel section 318a and the hydrogen gas outlet channel section 318b.

As another example, the plurality of sealing inserts may further include an overboard O-ring 324 for sealing an interface of the electrode assembly 302 with another electrode assembly at outer edges thereof. Specifically, the overboard O-ring 324 may be affixed or otherwise coupled to the plate 304 so as to circumscribe each of the electrolyte inlet well 312, the electrolyte inlet passages 314a, the berm 314b, the electrolyte outlet channel section 316, the hydrogen gas inlet channel section 318a, and the hydrogen gas outlet channel section 318b.

The carbon foam 306 may be positioned in a cavity 326 of the plate 304 between the berm 314b and the electrolyte outlet channel section 316 along the y-axis and between the hydrogen gas inlet channel section 318a and the hydrogen gas outlet channel section 318b along the x-axis. Specifically, the carbon foam 306 may be positioned in face-sharing contact with a side of the plate 304 forming a base of the cavity 326. In some examples, the carbon foam 306 may be formed as a continuous monolithic piece, while in other examples, the carbon foam 306 may be formed as two or more carbon foam sections. In an exemplary embodiment, the carbon foam 306 may be conductive, permeable, and porous, providing a distribution field for the electrolyte being gravity fed therethrough from the plurality of electrolyte inlet passages 314a. In some examples, a pore distribution of the carbon foam 306 may be between 10 and 100 PPI. In one example, the pore distribution may be 30 PPI. In additional or alternative examples, a permeability of the carbon foam 306 may be between 0. 02 and 0. 5 $mm^2$. As such, each of the pore distribution and the permeability, in addition to an overall size, of the carbon foam 306 may be selected to target a relatively small pressure drop and thereby induce convection of the electrolyte from the carbon foam 306 into the positive electrode 308. For example, the pressure drop may be targeted to between 2 to 3 mm of electrolyte head rise.

In some examples, the carbon foam 306 may be replaced with a flow field plate configured to transport the electrolyte into the positive electrode 308 via convection induced by a flow field configuration of the flow field plate. Specifically, the flow field plate may be fluidically coupled to each of the plurality of electrolyte inlet passages 314a and the electrolyte outlet channel section 316. In one example, the flow field plate may be integrally formed in the plate 304 of the electrode assembly 302, positioned beneath the positive electrode 308 with respect to the z-axis. In other examples, the flow field plate may be a separate, removable component.

In some examples, the flow field configuration may be an interdigitated flow field configuration, a partially interdigitated flow field configuration, or a serpentine flow field configuration. In some examples, each electrode assembly 302 may interface with a flow field configuration of like configuration (e. g., interdigitated, partially interdigitated, serpentine, and the like) as each other electrode assembly 302. In other examples, a number of different flow field configurations may be provided among the electrode assemblies 302 in the stack of electrode assemblies dependent upon a location of a given electrode assembly 302 in the rebalancing cell 202 of FIGS. 2A and 2B. In this way, the electrolyte may be directed from the electrolyte inlet port (e. g., the electrolyte inlet port 206 of FIGS. 2A and 2B) to the flow field plates respectively interfacing with the positive electrodes 308 in the stack of electrode assemblies, the flow field plates being configured in interdigitated flow field configurations, partially interdigitated flow field configurations, serpentine flow field configurations, or a combination thereof.

In certain examples, and as discussed in greater detail below with reference to FIGS. 4A and 4B, in addition to the carbon foam 306 being replaced with the flow field plate (also referred to herein as an "electrolyte flow field plate"), another flow field plate (also referred to herein as a "hydrogen gas flow field plate") may interface with the negative electrode 310 opposite from the positive electrode 308 with respect to the z-axis. However, in other examples, the electrolyte flow field plate may be included (e. g., replacing the carbon foam 306) and no hydrogen gas flow field plate may be present. In still other examples, the hydrogen gas flow field plate may be included (e. g., interfacing with the negative electrode 310) and no electrolyte flow field plate may be present.

The positive electrode 308 may be positioned in the cavity 326 in face-sharing contact with a side of the carbon foam 306 opposite from the plate 304 along the z-axis. In an exemplary embodiment, the positive electrode 308 may be a wicking conductive carbon felt, sponge, or mesh which may bring the electrolyte flowing through the carbon foam 306 into contact with the negative electrode 310 via capillary action. Accordingly, in some examples, the positive electrode 308 may be conductive and porous (though less porous than the carbon foam 306 in such examples). In one example, the electrolyte may be wicked into the positive electrode 308 when the porosity of the carbon foam 306 may be within a predefined range (e. g., below an upper threshold porosity so as to retain enough solid material to promote wicking up and into the positive electrode 308 and above a lower threshold porosity so as to not impede electrolyte flow through the carbon foam 306). In an additional or alternative example, each of a sorptivity of the positive electrode 308 may decrease and a permeability of the positive electrode 308 may increase with an increasing porosity of the positive electrode 308 (e. g., at least until too little solid material of the positive electrode 308 remains to promote wicking of the electrolyte, such as when a threshold porosity of the positive electrode 308 is reached). In some examples, surfaces of the positive electrode 308 may be sufficiently hydrophilic for desirable rebalancing cell operation (e. g., by facilitating thorough electrolyte wetting and thereby forming an ionically conductive medium). In such examples, an overall hydrophilicity of the positive electrode 308 may be increased by coating or treating the surfaces thereof. Further, though at least some of the $H_2$ gas may pass into the positive electrode 308 in addition to a portion of the electrolyte wicked into the positive electrode 308, the positive electrode 308 may be considered a separator between a bulk of the $H_2$ gas thereabove and a bulk of the electrolyte therebelow.

In some examples, each of the positive electrode 308 and the negative electrode 310 may be formed as a continuous monolithic piece (e. g., as opposed to discrete particles or a plurality of pieces), such that interphase mass-transport losses across boundary layer films may be reduced when bringing the electrolyte into contact with the $H_2$ gas

at the catalytic surfaces of the negative electrode 310, thereby promoting ion and proton movement. In contrast, a packed bed configuration including discretely packed catalyst particles may include mass-transport limiting boundary layer films surrounding each individual particle, thereby reducing a rate of mass-transport of the electrolyte from a bulk thereof to surfaces of the particles.

The negative electrode 310 may be positioned in the cavity 326 in face-sharing contact with a side of the positive electrode 308 opposite from the carbon foam 306 along the z-axis, such that a three-phase contact interface between the (wicked) electrolyte, the catalytic surfaces of the negative electrode 310, and the $H_2$ gas may be formed for proton (e. g., $H^+$) and ion movement ($H_3O^+$) therethrough. In tandem, the positive electrode 308 may reduce an overall electronic resistance by providing a conductive path for electrons to move into the electrolyte front and reduce $Fe^{3+}$ ions thereat.

In an exemplary embodiment, the negative electrode 310 may be a porous non-conductive material or a conductive carbon substrate with a metal catalyst coated thereon. In some examples, the porous non-conductive material may include polytetrafluoroethylene (PTFE), polypropylene, or the like. In some examples, the conductive carbon substrate may include carbon cloth or carbon paper. In some examples, the metal catalyst may include a precious metal catalyst. In some examples, the precious metal catalyst may include Pt. In additional or alternative examples, the precious metal catalyst may include Pd, Rh, Ru, Ir, Ta, or alloys thereof. In some examples, a relatively small amount (e. g., 0. 2 to 0. 5 wt.%) of the precious metal catalyst supported on the conductive carbon substrate may be employed for cost considerations. In practice, however, the amount of the precious metal catalyst may not be particularly limited and may be selected based on one or more of a desired rate of reaction for the rebalancing cell and an expected lifetime of the rebalancing cell. Furthermore, alloys included in the precious metal catalyst may be utilized to reduce cost and increase a corrosion stability of the precious metal catalyst. For example, 10% addition of Rh to Pt may reduce corrosion of Pt by $Fe^{3+}$ by over 98%. In other examples, the metal catalyst may include a non-precious metal catalyst selected for stability in ferric solution and other such acidic environments (e. g., molybdenum sulfide). In one example, the negative electrode 310 may include carbon cloth coated with 1. 0 mg/cm$^2$ Pt and may include a microporous layer bound with a polytetrafluoroethylene (PTFE) binder (e. g., for hydrophobicity). Indeed, inclusion of the PTFE binder may increase a durability of rebalancing cell performance over extended durations relative to electrode assemblies formed using other binders.

In some examples, such as when the precious metal catalyst includes Pt, soaking of the negative electrode 310 may eventually result in corrosion of the precious metal catalyst. In other examples, and as discussed in greater detail above with reference to FIGS. 2A and 2B, the electrode assembly 302 (along with the stack of electrode assemblies and the entire rebalancing cell) may be tilted or inclined with respect to a surface on which the rebalancing cell rests (e. g., the z-axis may be non-parallel with a direction of gravity) such that the precious metal catalyst may remain relatively dry as flow of the electrolyte is drawn through the carbon foam 306 toward the electrolyte outlet channel section 316 via gravity feeding. Thus, in some examples, the electrode assembly 302 may either be horizontal or inclined with respect to the surface on which the rebalancing cell rests at an angle of between 0° and 30°.

In an exemplary embodiment, the electrode assembly 302, including each of the carbon foam 306, the positive electrode 308, and the negative electrode 310, may be under compression along the z-axis, with the positive electrode 308 having a greater deflection than the carbon foam 306 and the negative electrode 310 under a given compressive pressure. Accordingly, a depth of the cavity 326 may be selected based on a thickness of the carbon foam 306, a thickness of the positive electrode 308, a desired compression of the positive electrode 308, and a thickness of the negative electrode 310.

Specifically, the depth of the cavity 326 may be selected to be greater than a lower threshold depth of a sum of the thickness of the carbon foam 306 after substantially complete compression thereof and the thickness of the positive electrode 308 after substantially complete compression thereof (to avoid overstressing and crushing of the carbon foam 306, which may impede electrolyte flow) and less than an upper threshold depth of a sum of the thickness of the carbon foam 306 and the thickness of the positive electrode 308 (to avoid zero compression of the positive electrode 308 and possibly a gap, which may result in insufficient contact of the $H_2$ gas and the electrolyte). For instance, in an example wherein the thickness of the carbon foam 306 is 6 mm, the thickness of the positive electrode 308 is 3. 4 mm, the desired compression of the positive electrode 308 is 0. 4 mm (so as to achieve a desired compressive pressure of 0. 01 MPa), and the thickness of the negative electrode 310 is 0. 2 mm, the depth of the cavity 326 may be 9. 2 mm (= 3.4 mm + 6 mm + 0. 2 mm - 0. 4 mm). As another example, the thickness of the carbon foam 306 may be between 2 and 10 mm, the thickness of the positive electrode 308 may be between 1 and 10 mm, the desired compression of the positive electrode 308 may be between 0 and 2. 34 mm (so as to achieve the desired compressive pressure of 0 to 0. 09 MPa), and the thickness of the negative electrode 310 may be between 0. 2 and 1 mm, such that the depth of the cavity 326 may be between 0. 86 and 21 mm.

In additional or alternative examples, the thickness of the positive electrode 308 may be 20% to 120% of the thickness of the carbon foam 306. In one example, the thickness of the positive electrode 308 may be 100% to 110% of the thickness of the carbon foam 306. In one example, the depth of the cavity 326 may further depend upon a crush strength of the carbon foam 306 (e. g., the depth of the cavity 326 may be increased with decreasing crush strength).

For instance, a foam crush factor of safety (FOS) may be 5. 78 when the depth of the cavity 326 is 9. 2 mm (e. g., when the desired compression of the positive electrode is 0. 4 mm). The foam crush FOS may have a minimum value of 0. 34 in some examples, where foam crush FOS values less than 1 may indicate that at least some crushing is expected. In some examples, the crush strength of the carbon foam 306 may be reduced by heat treatment of the carbon foam 306 during manufacturing thereof (from 0. 08 MPa to 0. 03 MPa, in one example).

It will be appreciated that the electrode assembly 302 may be configured such that the depth of the cavity 326 is as low as possible (e. g., within the above constraints), as generally thinner electrode assemblies 302 may result in a reduced overall size of the rebalancing cell and a reduced electrical resistance across the electrode assembly 302 (e. g., as the electrolyte flow may be closer to the negative electrode 310).

In this way, the electrode assembly 302 may include a sequential stacking of the carbon foam 306 and an interfacing pair of the positive electrode 308 and the negative electrode 310 being in face-sharing contact with one another and being continuously electrically conductive. Specifically, a first interface may be formed between the positive electrode 308 and the carbon foam 306 and a second interface may be formed between the positive electrode 308 and the negative electrode 310, the second interface being opposite to the first interface across the positive electrode 308, and each of the carbon foam 306, the positive electrode 308, and the negative electrode 310 may be electrically conductive. Accordingly, the electrode assembly 302 may be internally shorted, such that electric current flowing through the electrode assembly 302 may not be channeled through an external load.

In an exemplary embodiment, and as discussed above, forced convection may induce flow of the $H_2$ gas into the electrode assembly 302 and across the negative electrode 310 (e. g., via a flow field plate interfacing with the negative electrode 310). Thereat, the $H_2$ gas may react with the catalytic surface of the negative electrode 310 via equation (4a) (e. g., the reverse reaction of equation (1)):

$$\frac{1}{2}H_2 \rightarrow H^+ + e^- \text{ (anodic half reaction)} \qquad (4a)$$

The proton ($H^+$) and the electron ($e^-$) may be conducted across the negative electrode 310 and into the positive electrode 308. The electrolyte, directed through the electrode assembly 302 via the carbon foam 306, may be wicked into the positive electrode 308. At and near the second interface between the positive electrode 308 and the negative electrode 310, $Fe^{3+}$ in the electrolyte may be reduced via equation (4b):

$$Fe^{3+} + e^- \rightarrow Fe^{2+} \text{ (cathodic half reaction)} \qquad (4b)$$

Summing equations (4a) and (4b), the electrolyte rebalancing reaction may be obtained as equation (4):

$$Fe^{3+} + \frac{1}{2}H_2 \rightarrow Fe^{2+} + H^+ \text{ (electrolyte rebalancing)} \qquad (4)$$

Since the electrode assembly 302 is internally shorted, a cell potential of the electrode assembly 302 may be driven to zero as:

$$0 = (E_{\text{pos}} - E_{\text{neg}}) - (\eta_{\text{act}} + \eta_{\text{mt}} + \eta_{\text{ohm}}) \qquad (7)$$

where $E_{\text{pos}}$ is a potential of the positive electrode 308, $E_{\text{neg}}$ is a potential of the negative electrode 310, $\eta_{\text{act}}$ is an activation overpotential, $\eta_{\text{mt}}$ is a mass transport overpotential, and $\eta_{\text{ohm}}$ is an ohmic overpotential. For the electrode assembly 302 as configured in FIG. 3, $\eta_{\text{mt}}$ and $\eta_{\text{act}}$ may be assumed to be negligible. Further, $\eta_{\text{ohm}}$ may depend on an overpotential $\eta_{\text{electrolyte}}$ of the electrolyte and an overpotential $\eta_{\text{felt}}$ of the carbon felt forming the positive electrode 308 as:

$$\eta_{\text{ohm}} = \eta_{\text{electrolyte}} + \eta_{\text{felt}} \qquad (8)$$

Accordingly, performance of the electrode assembly 302 may be limited at least by an electrical resistivity $\sigma_{\text{electrolyte}}$ of the electrolyte and an electrical resistivity $\sigma_{\text{felt}}$ of the carbon felt. The electrical conductivity of the electrolyte and the electrical conductivity of the carbon felt may further depend on a resistance $R_{\text{electrolyte}}$ of the electrolyte and a resistance $R_{\text{felt}}$ of the carbon felt, respectively, which may be given as:

$$R_{\text{electrolyte}} = \sigma_{\text{electrolyte}} \times t_{\text{electrolyte}} / A_{\text{electrolyte}} \qquad (9)$$

$$R_{\text{felt}} = \sigma_{\text{felt}} \times t_{\text{felt}} / A_{\text{felt}} \qquad (10)$$

where $t_{\text{electrolyte}}$ is a thickness of the electrolyte (e. g., a height of the electrolyte front), $t_{\text{felt}}$ is a thickness of the carbon felt (e. g., the thickness of the positive electrode 308), $A_{\text{electrolyte}}$ is an active area of the electrolyte (front), and $A_{\text{felt}}$ is an active area of the carbon felt. Accordingly, the performance of the electrode assembly 302 may further be limited based on a front location of the electrolyte within the carbon felt and therefore the distribution of the electrolyte across the carbon foam 306 and an amount of the electrolyte wicked into the carbon felt forming the positive electrode 308.

After determining $R_{\text{electrolyte}}$ and $R_{\text{felt}}$, an electric current $I_{\text{assembly}}$ of the electrode assembly 302 may be determined as:

$$I_{\text{assembly}} = (E_{\text{pos}} - E_{\text{neg}}) / (R_{\text{electrolyte}} + R_{\text{felt}}) \qquad (11)$$

and a rate $v_{\text{rebalancing}}$ of the electrolyte rebalancing reaction (e. g., the rate of reduction of $Fe^{3+}$) may further be determined as:

$$v_{\text{rebalancing}} = I_{\text{assembly}} / (nFA_{\text{rebalancing}}) \qquad (12)$$

where n is a number of electrons flowing through the negative electrode 310, F is Faraday's constant, and $A_{\text{rebalancing}}$ is an active area of the electrolyte rebalancing reaction (e. g., an area of an interface between the electrolyte front and the negative electrode 310). As a use-case example, for an uncompressed carbon felt having $t_{\text{felt}}$ = 3 mm, $v_{\text{rebalancing}}$ may have a maximum value of 113 mol/$m^2$hr. However, other characteristics of the uncompressed carbon felt may be used, in alternate examples.

The hydrogen gas flow through the rebalancing cell 202, shown in FIGS. 2A and 2B may be implemented via at least two patterns. A first flow pattern is shown in FIGS. 4A and 4B in which the hydrogen gas outlet port 212, shown in FIG. 2B, is open. Conversely, a second flow pattern is shown in FIGS. 5A and 5B in which the hydrogen gas outlet port 212, shown in FIG. 2B, is closed. Closing the hydrogen gas outlet port provides a dead-ended flow configuration. The cutting planes for the cross-sectional views of FIGS. 4A-5B are parallel to the z-x plane and extend through the central axis of the hydrogen gas inlet port 210.

Referring now specifically to FIGS. 4A and 4B, a cross-sectional view and a magnified inset view 450 of the rebalancing cell 202 are respectively shown. Each of the cross-sectional view and the magnified inset view 450 depict exemplary aspects of $H_2$ gas flow within the rebalancing cell 202. Specifically, the magnified inset view 450 magnifies a portion of the cross-sectional view delimited by a dashed ellipse 410.

As shown in FIGS. 4A and 4B, the rebalancing cell 202 may include an electrode assembly stack 402 formed as a stack of individual electrode assemblies 302 aligned such that the hydrogen gas inlet channel section 318a of each electrode assembly 302 forms a continuous hydrogen gas inlet channel 404 with the hydrogen gas inlet channel section 318a of each electrode assembly 302. A hydrogen gas inlet manifold 406 may further be included in the hydrogen gas inlet channel 404, the hydrogen gas inlet manifold 406 fluidically coupling the hydrogen gas inlet channel 404 to the hydrogen gas inlet port 210.

Respective hydrogen gas inlet channel O-rings 322a and overboard O-rings 324 may seal the hydrogen gas inlet channel 404 at interfaces between pairs of the electrode assemblies 302. It will be appreciated that cut portions of the rebalancing cell 202 are depicted in the cross-sectional view of FIG. 4A and the magnified inset view 450 of FIG. 4B for detail, and that additional features of the rebalancing cell 202 (e. g., shown in FIGS. 2A and 2B) may not be depicted. Further, it will be appreciated that greater or fewer electrode assemblies 302 may be included in the electrode assembly stack 402 than shown in the cross-sectional view for a given application (however, in one use-case example, scale-up performance may be substantially insensitive to $H_2$ gas flow at or below 50% $H_2$ gas utilization). Further, though structural features of the hydrogen gas inlet channel 404 and adjacent components are described in detail with reference to FIGS. 4A and 4B, it will be appreciated that structural features of a corresponding hydrogen gas outlet channel (e. g., formed by aligning a hydrogen gas outlet channel section 318b (see FIG. 3) of each electrode assembly 302) and adjacent components may be similarly configured (excepting that a hydrogen gas outlet manifold in fluidic communication with the hydrogen gas outlet channel may be positioned opposite to the hydrogen gas inlet manifold 406 along the x and z axes).

As shown, and as indicated by arrows 408a, the $H_2$ gas enters the hydrogen gas inlet port 210. The $H_2$ gas may be delivered from a hydrogen source such as a hydrogen flow generator or storage tank. Next, as indicated via arrow 408b, the hydrogen gas flows from the hydrogen gas inlet port 210 to the hydrogen gas inlet manifold 406. Next, as indicated via arrows 408c, the hydrogen gas flows through the hydrogen gas inlet channel 404 from the hydrogen gas inlet manifold 406. From the hydrogen gas inlet channel 404, gas flows into hydrogen gas inlet passages 452 between the electrodes, as indicated via arrows 408d.

In the electrode assembly stack flow configuration shown in FIGS. 4A and 4B, the hydrogen gas outlet port 212, shown in FIG. 2B, is open. Hydrogen gas therefore flows across the electrode assembly stack 402 (generally in directions parallel to the x-axis) through hydrogen gas channels 420 between the plates 304 and the negative electrodes 310 as indicated via arrows 408e. Arrows 408f depict the flow of hydrogen gas from the hydrogen gas channels 420 to the hydrogen gas outlet manifold and then to the hydrogen gas outlet port 212, shown in FIG. 2B. In this way, hydrogen may be effectively flowed through the cell.

Referring now to FIGS. 5A and 5B, a cross-sectional view and a magnified inset view 450 of the rebalancing cell 202 are respectively shown. Each of the cross-sectional view and the magnified inset view 550 depict exemplary aspects of $H_2$ gas flow within the rebalancing cell 202. Specifically, the magnified inset view 550 magnifies a portion of the cross-sectional view delimited by a dashed ellipse 510.

In the rebalancing cell flow configuration shown in FIGS. 5A and 5B, the hydrogen gas outlet port 212, shown in FIG. 2B, is closed, thereby dead-ending the hydrogen flow, as noted above.

The electrode assembly stack 402 in the rebalancing cell 202 is again shown in FIGS. 5A and 5B with sequentially arranged electrode assemblies 302. Each electrode assembly 302 again includes the negative electrode 310, the positive electrode 308, the activated carbon foam 306, the plate 304, and the hydrogen gas inlet channel seal insert 320a, in the illustrated example. However, other electrode assembly configurations may be used, in other examples.

As shown, and as indicated by arrows 508a, the $H_2$ gas enters the hydrogen gas inlet port 210. Next, as indicated via arrow 508b, the hydrogen gas flows from the hydrogen gas inlet port 210 to the hydrogen gas inlet manifold 406. Next, as indicated via arrows 508c, the hydrogen gas flows through the hydrogen gas inlet channel 404 from the hydrogen gas inlet manifold 406. From the hydrogen gas inlet channel 404, hydrogen gas flows into hydrogen gas inlet passages 452 between the electrodes, as indicated via arrows 508d. This initial stage of the hydrogen flow is similar to the initial portion of the hydrogen flow pattern depicted in FIGS. 4A and 4B.

However, as illustrated in FIGS. 5A and 5B, as indicated via arrows 508e, hydrogen gas flows from the hydrogen gas channels 420 and through the negative electrode 310 and then the positive electrode 308. In this way, due to the closure of the hydrogen gas outlet, hydrogen gas is forced through the electrolyte side of the electrode assemblies. Once the hydrogen gas is on the positive sides of the electrode assemblies, the gas flows into the electrolyte outlet manifold and then exits through the hydrogen gas relief port 214 shown in FIG. 2A. To elaborate, the hydrogen gas flows into the page and to the hydrogen gas relief port 214 shown in FIG. 2A. Further, some of the hydrogen gas flow may be entrained in the electrolyte and exit out of the electrolyte outlet ports 208, shown in FIG. 2A.

The two flow patterns in the rebalancing cell 202 depicted in FIGS. 4A-5B allow for four different series plumbing orientations to connect multiple rebalancing cells to increase (e. g., maximize) the hydrogen gas flowrate through each rebalancing cell unit. The cells can therefore achieve a desired reaction rate, thereby increasing battery efficiency. FIGS. 6-9 depict different flow arrangements in a rebalancing cell system 600 for a redox flow battery such as the redox flow battery 11 shown in FIG. 1 or other suitable redox flow battery.

Referring now to FIGS. 6A and 6B, a cross-sectional view 600 and a magnified inset view 650 are respectively shown, each of the cross-sectional view 600 and the magnified inset view 650 depicting exemplary aspects of electrolyte flow within the rebalancing cell 202. Specifically, the magnified inset view 650 magnifies a portion of the cross-sectional view 600 delimited by a dashed ellipse 610. As shown in FIGS. 6A and 6B, the rebalancing cell 202 may include one or more electrolyte inlet channels 614 fluidically coupled to the electrolyte inlet wells 312 included in the individual electrode assemblies 302 of the electrode assembly stack 402. Each of the one or more electrolyte inlet channels 614 may be fluidically coupled to an electrolyte inlet plenum 606a located above the electrode assembly stack 402 with respect to the z-axis via a respective nozzle or orifice 612 modulating, restricting, or otherwise controlling flow of the electrolyte into the respective electrolyte inlet channel 614. The electrolyte inlet plenum 606a may further be fluidically coupled to the electrolyte inlet port (e. g., the electrolyte inlet port 206 of FIGS. 2A and 2B; not shown at FIGS. 6A and 6B). The electrode assembly stack 402 may further be formed as a stack of the individual electrode assemblies 302 aligned such that the electrolyte outlet channel section 316 of each electrode assembly forms a continuous electrolyte outlet channel 604 with the electrolyte outlet channel section 316 of each electrode assembly 302, the electrolyte outlet channel 604 being parallel to the one or more electrolyte inlet channels 614 and to the z-axis and on an opposite end of the rebalancing cell 202 from the one or more electrolyte inlet channels 614 with respect to the y-axis. An electrolyte outlet plenum 606b may further be included in the electrolyte outlet channel 604, the electrolyte outlet plenum 606b fluidically coupling the electrolyte outlet channel 604 to the electrolyte outlet port 208. Respective overboard O-rings 324 may seal the electrolyte outlet channel 604 at interfaces between pairs of electrode assemblies 302. It will be appreciated that cut portions of the rebalancing cell 202 are depicted in the cross-sectional view 600 and the magnified inset view 650 for detail, and that additional features of the rebalancing cell 202 (e. g., shown in FIGS. 2A and 2B) may not be depicted. Further, it will be appreciated that greater or fewer electrode assemblies 302 may be included in the electrode assembly stack 402 than shown in the cross-sectional view 600 for a given application.

The electrolyte may enter the electrolyte inlet plenum 606a via the electrolyte inlet port, wherefrom the electrolyte may be directed into the one or more electrolyte inlet channels 614 via the one or more orifices 612, respectively. In some examples, a cross-sectional shape of the electrolyte inlet plenum 606a may be selected for ease of machining. As an example, the cross-sectional shape of the electrolyte inlet plenum 606a may be rectangular. As another example, the cross-sectional shape of the electrolyte inlet plenum 606a may be circular. A size of the electrolyte inlet plenum 606a may be selected to realize a relatively low pressure drop upon entry of the electrolyte into the rebalancing cell 202.

In some examples, a size of each of the one or more orifices 612 may be between 3 and 10 mm, as dependent on a total number of electrode assemblies 302 in the electrode assembly stack 402, an overall size of the rebalancing cell 202, and an electrolyte flow path design. The size and overall configuration of each of the one or more orifices 612 may be selected to maintain substantially even electrolyte flow throughout each electrode assembly 302 of the electrode assembly stack 402.

In some examples, each of the one or more electrolyte inlet channels 614 may be a continuous and unbroken channel configured adjacent to the electrode assembly stack 402. In other examples, each electrode assembly 302 of the electrode assembly stack 402 may include one or more electrolyte inlet channel sections corresponding to the one or more electrolyte inlet channels 614, respectively. In such examples, the electrode assemblies 302 of the electrode assembly stack 402 may be aligned such that the one or more electrolyte inlet channel sections of each electrode assembly 302 respectively form the one or more electrolyte inlet channels 614 with the one or more electrolyte inlet channel sections of each other electrode assembly 302.

In some examples, the one or more electrolyte inlet channels 614 may include a plurality of electrolyte inlet channels 614 and the one or more orifices 612 may include a plurality of orifices 612 respectively fluidically coupled to the plurality of electrolyte inlet channels 614, such that an electrolyte inlet manifold may be formed. In the cross-sectional view 600 of FIG. 6A, a single nearest electrolyte inlet channel 614 of the plurality of electrolyte inlet channels 614 is visible, obscuring each other electrolyte inlet channel 614 of the plurality of electrolyte inlet channels 614 aligned therewith parallel to the x-axis. In some examples, each of the plurality of electrolyte inlet channels 614 forming the electrolyte inlet manifold may be respectively fluidically coupled to a single electrode assembly 302 of the electrode assembly stack 402 so as to evenly flow the electrolyte across the electrode assemblies 302 of the electrode assembly stack (e. g., at an electrolyte flow rate of -10-40 L/min per $m^2$ of the catalytic surfaces of the negative electrode 310).

In some examples, the electrolyte entering the electrolyte inlet plenum 606a may have an adjustable flow rate (e. g., by a controller of the redox flow battery system, such as the controller 88 of FIG. 1, executing instructions stored in non-transitory memory thereof) such that even distribution of the electrolyte into and within the rebalancing cell 202 may be controllably adjusted based on a given application. In certain examples, electrolyte flow distribution between individual electrode assemblies 302 of the electrode assembly stack 402 may be correspondingly adjusted based on adjustments to the electrolyte flow rate of the electrolyte entering the electrolyte inlet plenum 606a.

In other examples, each of the plurality of electrolyte inlet channels 614 may be fluidically coupled to each electrode assembly 302 of the electrode assembly stack 402 so as to evenly distribute the electrolyte across the electrode assembly stack 402 with respect to both the x- and y-axes. In alternative examples, the one or more electrolyte inlet channels 614 may include one electrolyte inlet channel 614 which may be fluidically coupled to each electrode assembly 302 of the electrode assembly stack 402.

In some examples, a cross-sectional shape of each of the one or more electrolyte inlet channels 614 may be a circle. However, the cross-sectional shape of each of the one or more electrolyte inlet channels 614 is not particularly limited and other geometric shapes may be employed. A size of each of the one or more electrolyte inlet channels 614 may be selected to realize a relatively low pressure drop for the electrolyte flow rate of -10-40 L/min per $m^2$ of the catalytic surfaces of the negative electrode 310 (e. g., relatively small sizes may result in poor distribution of the electrolyte) while maintaining practical size considerations of the rebalancing cell 202 as a whole (e. g., relatively large sizes may result in an undesirably large rebalancing cell 202). In one example, the cross-sectional shape of each of the one or more electrolyte inlet channels 614 may be a circle having a diameter of between 10 and 30 mm.

Upon entering the one or more electrolyte inlet channels 614, a pressure therein may be substantially similar to a pressure of an electrolyte source (e. g., the negative and positive electrode compartments 22 and 20 and/or the integrated multi-chambered electrolyte storage tank 110 of FIG. 1), such that gravity may substantially exclusively drive electrolyte flow through the one or more electrolyte inlet channels 614. Specifically, and as indicated by arrows 608a, the electrolyte may flow through the one or more electrolyte inlet channels 614 in a negative direction along the z-axis and into the electrolyte inlet wells 312 of the electrode assembly stack 402. The sloped support 220 may tilt the rebalancing cell 202 such that the z-axis is offset from the axis g coincident with the direction of gravity, and the electrolyte may flow through the carbon foams 306 of the electrode assembly stack 402 via gravity feeding (as indicated by arrows 608b).

As further shown, and as indicated by arrows 608c, while flowing through the carbon foams 306 of the electrode assembly stack 402, at least some of the electrolyte may be induced into the positive electrodes 308 of the electrode assembly stack 402 towards the negative electrodes 310 of the electrode assembly stack 402 via capillary action. $Fe^{3+}$ ions in the electrolyte may be reduced by electrons flowing through the negative electrodes 310 of the electrode assembly stack 402 in a cathodic half reaction (see equation (4b)) to generate $Fe^{2+}$ ions. For each electrode assembly 302 of the electrode assembly stack 402, to ensure that no gap is present between the positive electrode 308 and the negative electrode 310 (which may result in a decreased $Fe^{3+}$ reduction rate), a depth 652 of the cavity (e. g., the cavity 326 of FIG. 3) may be selected such that the positive electrode 308 is at least partially compressed without excessively compressing the carbon foam 306 (which may buckle and degrade a foam structure thereof). Accordingly, to minimize compression of the carbon foam 306 in each electrode assembly 302 of the electrode assembly stack 402, a thickness 654 of the adjacent positive electrode 308 may be decreased (e. g., by about 10%) relative to when the positive electrode 308 is fully uncompressed. In some examples, for each electrode assembly 302 of the electrode assembly stack 402, the thickness 654 of the positive electrode 308 may be 20% to 120% of the thickness 656 of the carbon foam 306, where each of the thickness 654 of the positive electrode 308 and the thickness 656 of the carbon foam 306 may be selected based on structural considerations such as the permeability of the carbon foam 306, an overall size of the positive electrode 308, etc. In one example, for each electrode assembly 302 of the electrode assembly stack 402, the thickness 654 of the positive electrode 308 may be 100% to 110% of the thickness 656 of the carbon foam 306.

As further shown, and as indicated by arrows 608d, after flowing through the carbon foams 306 of the electrode assembly stack 402, the electrolyte may be directed through electrolyte outlet passages 658 of the electrode assembly stack 402, into the electrolyte outlet channel 604, and out through the electrolyte outlet port 208 therefrom. Specifically, for each given electrode assembly 302 of the electrode assembly stack 402, the electrolyte may flow from the carbon foam 306 through the electrolyte outlet passage 658 and into the electrolyte outlet channel section 316, wherefrom the electrolyte may flow with the direction of gravity (e. g., along the positive direction of the axis g) into the electrolyte outlet plenum 606b (after passing through any further electrolyte outlet channel sections 316 interposed between the given electrode assembly 302 and the electrolyte outlet plenum 606b). The electrolyte may then pass through the electrolyte outlet plenum 606b and into the electrolyte outlet port 208, wherefrom the electrolyte may be expelled from the rebalancing cell 202. In this way, the electrolyte may be directed from the electrolyte inlet port (e. g., the electrolyte inlet port 206 of FIGS. 2A and 2B; not shown at FIGS. 6A and 6B) through the carbon foams 306 of the electrode assembly stack 402 to the electrolyte outlet port 208.

In some examples, an overall size of each of the electrolyte outlet passages 658 may be selected so as to be sufficiently large to generate a suitable pressure drop and to not overfill the electrolyte outlet plenum 606b (which may flood the electrode assemblies 302 at a bottom of the electrode assembly stack 402 with respect to the z-axis). Accordingly, in such examples, the overall size of each of the electrolyte outlet passages 658 may depend on an overall size of the electrolyte outlet plenum 606b and an overall number of openings corresponding to the electrolyte outlet port 208. In other examples, dimensions of the electrolyte outlet plenum 606b may be larger to accommodate an electrolyte outlet port 208 having fewer, larger openings. In examples wherein the electrolyte outlet port 208 is positioned on the face of the cell enclosure 204 facing the negative direction of the z-axis, larger openings may be accommodated while maintaining a thickness of a lowest electrode assembly 302 along the z-axis and the pressure drop may be further reduced (e. g., as the electrolyte would not flow at a -90° angle from the electrolyte outlet plenum 606b to the electrolyte outlet port 208).

As further shown, flow field plates 626 may respectively interface with the electrode assemblies 302 of the electrode assembly stack 402. In some examples, the flow field plate 626 may interface (e. g., be in face-sharing contact) with the negative electrode 310 of a given electrode assembly 302 and may be integrally formed in the plate 304 of an adjacent electrode assembly 302, positioned beneath the carbon foam 306 of the adjacent electrode assembly 302 with respect to the z-axis. In other examples, the flow field plate 626 interfacing with the negative electrode 310 of the given electrode assembly 302 may be a separate, removable component. Additionally, and as further shown, a topmost flow field plate 626 with respect to the z-axis may not be integrally formed with any electrode assembly 302 and may instead be included in the rebalancing cell 202 as either a separate, removable component or an integral feature of another component (e. g., the cell enclosure 204 of FIGS. 2A and 2B).

In an exemplary embodiment, the one or more hydrogen gas inlet passages 452, configured to flow the $H_2$ gas across a given electrode assembly 302, may be formed from the flow field plate 626 interfacing with the negative electrode 310 of the given electrode assembly 302. For instance, the one or more hydrogen gas inlet passages 452 may be configured as either a plurality of hydrogen gas inlet passages 452 parallel to one another and the x-axis (e. g., in the interdigitated flow field configuration or the partially interdigitated flow field configuration) or a single, coiled hydrogen gas inlet passage 452 into which the $H_2$ gas may enter parallel to the x-axis (e. g., in the serpentine flow field configuration). In some examples, the one or more hydrogen gas inlet passages 452 may extend parallel to the x-axis while the electrolyte may flow through the carbon foam 306 of the given electrode assembly 302 parallel to the y-axis (as indicated by the arrows 608b). Accordingly, in such examples, the $H_2$ gas may be directed into the electrode assembly stack 402 at a 90° angle from which the electrolyte may be directed into the electrode assembly stack 402.

In additional or alternative examples, the carbon foam 306 of a given electrode assembly 302 may be replaced with a flow field plate of substantially similar flow field configuration to the flow field plate 626. In one such example, the flow field configuration of the flow field plate replacing the carbon foam 306 of the given electrode assembly 302 may be oriented in the same direction as the flow field configuration of the flow field plate 626 with respect to the x- and y-axes. In another such example, the flow field configuration of the flow field plate replacing the carbon foam 306 of the given electrode assembly 302 may be oriented in a different direction as the flow field configuration of the flow field plate 626 (e. g., at a 90° angle, a 180° angle, or a 270° angle) with respect to the x- and y-axes.

Referring now to FIGS. 7A and 7B, partial flow configurations 700 and 750 for the redox flow battery system 10 of FIG. 1 are shown. In particular, the partial flow configurations 700 and 750 illustrate flow paths of electrolyte and hydrogen gas in the redox flow battery system 10 between the multi-chambered electrolyte storage tank 110 and RBC 780. RBC 780 corresponds to either RBC 80 or RBC 82 of FIG. 1. In particular, the partial flow configurations 700 and 750 illustrate flow paths of electrolyte and hydrogen gas diverted upstream of the redox flow battery 18. Partial flow configurations 700 and 750 may thus represent flow paths for the negative electrolyte and hydrogen gas between the multi-chambered electrolyte storage tank 110 and the rebalancing cell 80, or the positive electrolyte and hydrogen gas between the multi-chambered electrolyte storage tank 110 and the rebalancing cell 82. As such main electrolyte pump 730 may correspond to electrolyte pumps 30 and 32, and control valve 774 and auxiliary electrolyte pump 776 may correspond to electrolyte flow control device 76 and electrolyte flow control device 78, and $H_2$ flow generator 770 may correspond to hydrogen gas flow control device 66 and hydrogen gas flow control device 68.

As described with reference to FIG. 1, the control valve 774 of FIG. 7A and the auxiliary electrolyte pump 776 of FIG. 7B may be communicatively coupled to the controller 88. Accordingly, the controller 88 may modulate the control valve 774 and the auxiliary electrolyte pump 776 in order to regulate the flow of electrolyte supplied to the RBC 780. In one example, the control valve 774 may include a proportional control valve. In one example, modulating the control valve 774 may include adjusting the control valve 774 to a more open position or to a more closed position to increase or decrease, respectively, the electrolyte flow to the RBC 780. In another example, modulating the auxiliary electrolyte pump 776 may include increasing or decreasing a speed of the auxiliary electrolyte pump 776 in order to increase or decrease, respectively, an electrolyte flow to the RBC 780. In one example both the electrolyte flow control devices 76 and 78 may include the control valve 774; in another example, both the electrolyte flow control devices 76 and 78 may include the auxiliary electrolyte pump 776. In another example, one of the electrolyte flow control devices 76 and 78 may include a control valve 774 and the other of the electrolyte flow control devices 76 and 78 may include an auxiliary electrolyte pump 776. An electrolyte flow measurement device 784 (not shown in FIG. 1 for clarity), such as a flow meter, may be positioned in the electrolyte supply line upstream of RBC 780. Downstream of the RBC 780, liquid electrolyte is returned by way of an electrolyte return line to the multi-chambered electrolyte storage tank 110.

The $H_2$ flow generator 770 may correspond to hydrogen gas flow control devices 66 and 68, and may include one or more of a hydrogen gas injector, venturi injector, mass flow controller, mass flow meter, a gas blower, and a gas pressure regulator. The $H_2$ flow generator may be communicatively coupled to the controller 88. Accordingly, the controller 88 may modulate the $H_2$ flow generator 770 in order to regulate the flow of hydrogen gas supplied to the RBC 780. As described herein, $H_2$ gas may be supplied from one or more of the head spaces 90 and 92 of the multi-chambered electrolyte storage tank 110 and a hydrogen gas source 760. As non-limiting examples, the hydrogen gas source 760 can include a hydrogen storage tank or a hydrogen gas cylinder external to the multi-chambered electrolyte storage tank 110.

In one example, modulating the $H_2$ flow generator 770 may include adjusting a gas pressure regulator to increase or decrease a hydrogen gas pressure, thereby increasing or decreasing, respectively, a flow rate of the hydrogen gas to the RBC 780. In another example, modulating the $H_2$ flow generator 770 may include increasing or decreasing a magnitude of an input signal (e.g., voltage, current, and the like) transmitted to a mass flow controller in order to increase or decrease, respectively, a flow rate of the hydrogen gas to the RBC 780. In another example, modulating the $H_2$ flow generator 770 may include increasing or decreasing a magnitude of an input signal (e.g., voltage, current, and the like) transmitted to a hydrogen gas injector in order to increase or decrease, respectively, a flow rate of the hydrogen gas to the RBC 780. In another example, modulating the $H_2$ flow generator 770 may include increasing or decreasing a motor speed of a gas blower in order to increase or decrease, respectively, a flow rate of the hydrogen gas to the RBC 780. A hydrogen gas flow measurement device 786 (not shown in FIG. 1 for clarity), such as a gas flow meter, may be positioned in the $H_2$ supply line upstream of RBC 780. Downstream of the RBC 780, hydrogen gas is returned by way of an $H_2$ return line to one or more of the multi-chambered electrolyte storage tank 110 and the hydrogen gas source 760. For the case where $H_2$ is supplied from $H_2$ source 760, hydrogen gas is returned by way of the $H_2$ return line to the $H_2$ source.

As described above with reference to rebalancing reaction equation (3), electrolyte and hydrogen gas are supplied to the RBC 780 to maintain electrolyte health and battery capacity. In particular, excess ferric ion (e.g., in the case where the redox flow battery system includes an IFB) and hydrogen in the redox flow battery system are reduced by way of the rebalancing reaction (represented by equation (4)), thereby limiting parasitic side reactions (e.g., as represented by equations (1) and (2) for the case of an IFB). In the case where the RBC 780 corresponds to the rebalancing cell of FIGS. 2A and 2B described herein, a small pressure gradient may be maintained within the RBC 780 where the negative (hydrogen gas) side pressure is slightly higher than the positive (electrolyte) side pressure. Higher gas pressure and gravity aid in reducing electrolyte flooding at the negative side during operation of the RBC 780.

However, electrolyte flooding may occur when hydrogen flow at the RBC 780 is insufficient to support the rebalancing reaction rate. In one example, when the hydrogen gas flow rate is below a lower threshold hydrogen gas flow rate, hydrogen gas at the negative side of the rebalancing reactor may be consumed and depleted such that a pressure at the negative side of the RBC 780 substantially decreases below a threshold hydrogen gas pressure, thereby leading to electrolyte flooding thereat.

Referring to FIGS. 4A and 4B, the negative side of the RBC 780 may refer to the internal volumes of the electrode assemblies 302 and electrode assembly stack 402 where the hydrogen gas flows during conditions where the hydrogen gas outlet port 212 is open and during conditions when the RBC 780 is not flooded. Accordingly, the negative side of the RBC 780 may include the hydrogen gas inlet manifold 406, hydrogen gas inlet channel 404 (including the hydrogen gas inlet channel sections 318a of each electrode assembly 302), hydrogen gas outlet channel (including the hydrogen gas outlet channel sections 318b of each electrode assembly 302), hydrogen gas inlet passages 452, and the hydrogen gas channels 420 between the plates 304 and the negative electrodes 310. The negative side of the RBC 780 may further include the hydrogen gas flow field plate, when present in the electrode assembly 302.

Referring to FIGS. 6A and 6B, the positive side of the RBC 780 may refer to the internal volumes of the electrode assemblies 302 and electrode assembly stack 402 where the liquid electrolyte flows during conditions when the RBC 780 is not flooded. Accordingly, the positive side of the RBC 780 may include an electrolyte inlet manifold (including the electrolyte inlet channels 614), electrolyte inlet wells 312, electrolyte inlet plenum 606a, orifices 612, carbon foams 306, positive electrodes 308, electrolyte outlet channel sections 316, electrolyte outlet channel 604, and electrolyte outlet plenum 606b. The positive side of the RBC 780 may further include the electrolyte flow field plate, when present in the electrode assembly 302.

Referring now to FIGS. 8A and 8B, data plots 800 and 850 illustrate operating conditions for rebalancing cells in a redox flow battery system. The electrolyte flow rate 810 and the hydrogen gas flow rate 820 supplied to the RBC 780 are plotted as a function of SOC (data plot 800) and electrolyte concentration (data plot 850). Both the electrolyte flow rate 810 and the hydrogen gas flow rate 820 correspond to volumetric flow rates.

The SOC may be described as a ratio of an amount of electric charge stored in a redox flow battery to the full or total theoretical amount of electric charge that may be stored in the redox flow battery. Accordingly 100% SOC may correspond to when the redox flow battery system is in a fully charged state (e.g., fully charged to capacity), wherein additional metal cannot be plated at the plating electrode; whereas 0% SOC may correspond to when the redox flow battery system is in a fully discharged state, wherein no more metal can be oxidized and de-plated at the plating electrode. SOC values between 0% and 100% may correspond to when a redox flow battery SOC is intermediate between the fully charged and fully discharged states. Furthermore, the SOC may correspond to a charging SOC, wherein the SOC is measured during conditions when a redox flow battery is operating in a charging mode; and a discharging SOC, wherein the SOC is measured during conditions when a redox flow battery is operating in a discharging mode.

The SOC may be measured indirectly by one or more of sensors 60, 62, 70, and 72 by various means, including chemical means, such as measuring a pH or specific gravity of the liquid electrolyte. Furthermore, one or more of sensors 60, 62, 70, and 72 may include an oxygen-reduction potential (ORP) meter or an optical sensor for detecting a change in an electrolyte pH or a change in an electrolyte SOC. In the case of an IFB, the positive electrolyte ORP provides an indication of $[Fe^{3+}]$ in the positive electrolyte as a measure of SOC. As such, the SOC may be monitored during operation of the redox flow battery system 10 at the positive electrolyte chamber 52, the negative electrolyte chamber 50, the positive electrode compartment 22, and the negative electrode compartment 20.

Additionally or alternatively, the SOC of the redox flow battery may be determined from a plating efficiency of the redox flow battery and a shunt current flow of the redox flow battery, as described further below with reference to FIGS. 11A and 11B. The plating efficiency at the negative electrode may be indicative of a redox flow battery's capacity to source and sink current, and the plating efficiency values may correlate to the side reactions (e.g., as represented by equations (1), (2), and (3)) occurring at the negative electrode. In other words, the plating efficiency may be used to count coulombs entering and exiting an oxidation-reduction flow battery and to determine a SOC estimate for the oxidation-reduction flow battery. As such, determining SOC from the plating efficiency may be more accurate than other indirect measures of SOC such as ORP because the plating efficiency measurement may account for the deleterious effects of the negative side reactions on the apparent SOC.

Electrolyte concentration may be determined from the redox flow battery SOC, according to the electrochemical reactions taking place at the redox flow battery electrodes. In data plot 850, the electrolyte concentration varies from a lower electrolyte concentration A (corresponding to when the redox flow battery SOC is 0% or fully discharged) to a higher electrolyte concentration B (corresponding to when the redox flow battery SOC is 100% or fully charged). For the case of an IFB, the electrolyte concentration may correspond to the ferric ion concentration, $[Fe^{3+}]$. $[Fe^{3+}]$ may be correlated to the redox flow battery SOC as represented by equations (5) and (6). Ferric ion is produced at the positive electrode during charging of the redox flow battery; conversely, ferric ion is consumed at the positive electrode during discharging of the redox flow battery. Accordingly, as the redox flow battery SOC increases during battery charging, the ferric ion concentration in the redox flow battery system may increase; and as the redox flow battery SOC decreases during battery discharging, the ferric ion concentration in the redox flow battery system may decrease. The ferric concentration may be measured at the positive electrode compartment 22 and the positive electrolyte chamber 52 by sensors 72 and 62, respectively.

The electrolyte flow rate 810 may be determined from one or more of a speed of the auxiliary electrolyte pump 776, a speed of the main electrolyte pump 730, and a % open position of the control valve 774. Additionally or alternatively, the electrolyte flow rate 810 may be measured with the electrolyte flow measurement device 784. The hydrogen gas flow rate 820 may be determined from one or more of a pressure at a hydrogen gas source 760, a pressure at head spaces 90 and 92 of the multi-chambered electrolyte storage tank 110, an output signal from the $H_2$ flow generator 770, an input signal supplied to the $H_2$ flow generator 770, or a motor speed for the case when the $H_2$ flow generator includes a blower. Additionally or alternatively, the hydrogen gas flow rate 820 may be measured with the hydrogen gas flow measurement device 786.

The upper threshold hydrogen gas flow rate 824 may correspond to the hydrogen gas flow rate 820 during conditions when the $H_2$ flow generator 770 is configured to deliver hydrogen gas at an upper threshold pressure. The upper threshold pressure may correspond to one or more of a pressure above which integrity of the seals in the RBC 780 may be compromised and a highest available delivery pressure from a hydrogen gas source 760 and/or the head spaces 90 and 92 of the multi-chambered electrolyte storage tank 110. Additionally or alternatively, the upper threshold hydrogen gas flow rate 824 may correspond to when an input signal is transmitted to a hydrogen mass flow controller or a hydrogen gas injector is at its highest value; or when a hydrogen gas blower is operating at full blower speed.

Both the electrolyte flow rate 810 and hydrogen gas flow rate 820 are shown as a percentage of a respective upper threshold electrolyte flow rate 814 and upper threshold hydrogen gas flow rate 824 supplied to the RBC 780. In one example, the upper threshold electrolyte flow rate 814 may correspond to the electrolyte flow rate 810 when a control valve 774 is fully open and a pump speed of the main electrolyte pump 730 is at its highest capable pump speed, or when an auxiliary electrolyte pump is at its highest pump speed and a pump speed of the main electrolyte pump 730 is at its highest pump speed. In another example, the upper threshold electrolyte flow rate 814 may correspond to an electrolyte flow rate 810 above which a probability of electrolyte flooding at the negative side of the RBC 780 is increased, including when operating at the upper threshold hydrogen gas flow rate 824. Furthermore, the electrolyte flow rate 810 may be maintained above a lower threshold electrolyte flow rate 812 and the hydrogen flow rate 820 may be maintained above a lower threshold hydrogen flow rate 822. The lower threshold electrolyte flow rate 812 may correspond to an electrolyte flow rate below which a rebalancing reaction rate decreases such that a performance of the redox flow battery system is substantially reduced. The lower threshold hydrogen gas flow rate 822 may correspond to a hydrogen gas flow rate below which flooding of the RBC 780 is increased, even at or near a redox flow battery SOC of 0%.

From rebalancing reaction equation (4), the electrolyte rebalancing rate, $R_{rebalancing}$, for an IFB can be expressed as:

$$R_{rebalancing} = k \, [Fe^{3+}][H_2]^{1/2} \tag{13}$$

In equation (13), $k$ represents a rebalancing reaction rate constant; $k$ may be relatively constant with electrolyte and hydrogen gas concentration but may vary with temperature according to an Arrhenius relationship. The rebalancing reaction, as expressed by $R_{rebalancing}$, consumes ferric ion at a rate proportional to $[Fe^{3+}]$, and consumes hydrogen gas proportional to the square root of the hydrogen concentration, $[H_2]^{1/2}$. During operation of the redox flow battery system 10, the electrolyte concentration may vary depending on the redox flow battery SOC. In the case of an IFB, $[Fe^{3+}]$ increases as the redox flow battery SOC increases during battery charging, and $[Fe^{3+}]$ decreases as the redox flow battery SOC decreases during battery discharging. Accordingly, the controller 88 may modulate the flow rates of the electrolyte and the hydrogen gas to the RBC 780 in order to sustain the rebalancing reaction, whereby a constant $R_{rebalancing}$ is maintained independent of the redox flow battery SOC. Sustaining the rebalancing reaction and maintaining a constant $R_{rebalancing}$ includes mitigating electrolyte flooding at the RBC 780, since electrolyte flooding reduces $R_{rebalancing}$. In the example data plots 800 and 850, the changes in electrolyte flow rate 810 and hydrogen gas flow rate 820 modulated by the controller 88 are depicted as linear with respect to the changes in SOC (or electrolyte concentration). However, in other examples, the relationship between electrolyte flow rate 810 and hydrogen gas flow rate 820 and redox flow battery SOC (or electrolyte concentration) may be non-linear.

In order to maintain a higher performance of the redox flow battery system, the controller 88 may modulate the electrolyte and hydrogen gas flow rates supplied to the RBC 780 in order to achieve the maximum $R_{rebalancing}$ given the amount of hydrogen available for the rebalancing reaction. Further still, maintaining a constant $R_{rebalancing}$ (at the maximum $R_{rebalancing}$) and mitigating electrolyte flooding at the RBC 780 may include modulating the electrolyte and hydrogen gas flow rates to the RBC 780 while maintaining a mass flow ratio of hydrogen to electrolyte $(Q_{mass,H2} / Q_{mass,electrolyte})$ supplied to the RBC 780 constant. The mass flow ratio of hydrogen to electrolyte may be represented by equation (14):

$$Q_{mass,H2} / Q_{mass,electrolyte} = (Q_{H2} * [H_2]) / (Q_{electrolyte} * [Electrolyte]) \qquad (14)$$

$Q_{mass,H2}$ and $Q_{mass,electrolyte}$ represent the mass flow rates of hydrogen gas and electrolyte, respectively; and $Q_{H2}$ and $Q_{electrolyte}$ represent the volumetric flow rates of hydrogen gas and electrolyte, respectively. In the case of an IFB redox flow battery system, [Electrolyte] may correspond to [$Fe^{3+}$]. $Q_{H2}$ and $Q_{electrolyte}$ correspond to the hydrogen gas flow rate 820 and the electrolyte flow rate 810, as plotted in data plots 800 and 850.

In one example, $Q_{mass,H2} / Q_{mass,electrolyte}$ may be maintained above a threshold mass flow ratio, $(Q_{mass,H2} / Q_{mass,electrolyte})_{TH}$. $(Q_{mass,H2} / Q_{mass,electrolyte})_{TH}$ may correspond to a mass flow ratio where the amount of hydrogen gas supplied to the RBC 780 includes a small excess hydrogen gas relative to the stoichiometric amount of hydrogen as given by the rebalancing reaction equation (4). Maintaining $Q_{mass,H2} / Q_{mass,electrolyte}$ greater than $(Q_{mass,H2} / Q_{mass,electrolyte})_{TH}$ may aid in ensuring that sufficient hydrogen gas flow is supplied to the RBC 780 to support $R_{rebalancing}$ for the given $Q_{mass,electrolyte}$. Said another way, modulating the electrolyte and hydrogen gas flow rates to the RBC 780 to maintain $Q_{mass,H2} / Q_{mass,electrolyte}$ greater than $(Q_{mass,H2} / Q_{mass,electrolyte})_{TH}$ independent of redox flow battery SOC aids in preserving a small pressure gradient within the RBC 780 where a pressure at the negative side of the RBC 780 is slightly higher than the pressure at the positive side of the RBC 780. The higher pressure at the negative side relative to the positive side of the RBC 780 combined with induced gravity flow of the electrolyte at the positive side away from the negative side of the RBC 780 may aid in mitigating electrolyte flooding at the negative side of the RBC 780.

Maintaining $Q_{mass,H2} / Q_{mass,electrolyte}$ greater than $(Q_{mass,H2} / Q_{mass,electrolyte})_{TH}$ may further include limiting the excess hydrogen gas flow rate 820 at the RBC 780 to a small excess hydrogen gas flow rate. Limiting the excess hydrogen gas flow rate 820 to a small excess hydrogen gas flow rate aids in reducing operating costs while reducing parasitic power losses due to side reactions (e.g., equations (1) and (2)). In one example, $(Q_{mass,H2} / Q_{mass,electrolyte})_{TH}$ may include,

$$(Q_{mass,H2} / Q_{mass,electrolyte})_{TH} = (Q_{H2,TH,upper} * [H_2]) / (Q_{electrolyte,TH,upper} * [Electrolyte]_{TH}) \qquad (15)$$

In equation (15), $Q_{H2,TH,upper}$ and $Q_{electrolyte,TH,upper}$ represent upper threshold hydrogen gas flow rate 824 and the upper threshold electrolyte flow rate 814, respectively; and $[Electrolyte]_{TH}$ represents the threshold electrolyte concentration 858. For the case of an IFB, $[Electrolyte]_{TH}$ may correspond to $[Fe^{3+}]_{TH}$.

The dependence of $R_{rebalancing}$ with SOC (and $[Fe^{3+}]$) is reflected in how the controller 88 may modulate electrolyte and hydrogen flow rates to the RBC 780, as shown in the redox flow battery system operating condition data plots 800 and 850. The data plots 800 and 850 may be divided into three operating regions: a first condition may include when a redox flow battery SOC is less than a threshold redox flow battery SOC 808, and may further include when an electrolyte concentration is less than a threshold electrolyte concentration 858; a second condition may include when a redox flow battery SOC is equivalent to a threshold redox flow battery SOC 808, and may further include when an electrolyte concentration is equivalent to a threshold electrolyte concentration 858; a third condition may include when a redox flow battery SOC is greater than a threshold redox flow battery SOC 808, and may further include when an electrolyte concentration is greater than a threshold electrolyte concentration 858.

Although the data plots 800 and 850 represent the threshold redox flow battery SOC 808 and the threshold electrolyte concentration 858 as discrete values, in some embodiments, the threshold redox flow battery SOC 808 and the threshold concentration 858 may include a threshold range of SOC values and a threshold range of electrolyte concentrations, respectively. As an example, the threshold range of SOC values may include the threshold redox flow battery SOC 808 plus or minus a threshold SOC deviation, and the threshold range of electrolyte concentrations may include the threshold electrolyte concentration 858 plus or minus a threshold electrolyte concentration deviation. Accordingly, the first condition may include when the redox flow battery SOC is less than the threshold SOC minus the threshold SOC deviation and the third condition may include when the redox flow battery SOC is greater than the threshold SOC plus the threshold SOC deviation. Additionally or alternatively, the first condition may include when the electrolyte concentration is less than the threshold electrolyte concentration minus the threshold electrolyte concentration deviation and the third condition may include when the electrolyte concentration is greater than the threshold electrolyte concentration plus the threshold electrolyte concentration deviation.

As described above, in the case of an IFB, the electrolyte concentration may correspond to the ferric ion concentration. During the first condition, the redox flow battery SOC is lower than the threshold redox flow battery SOC (and the electrolyte concentration is lower than the threshold electrolyte concentration), and the electrolyte concentration at the RBC 780 may be a limiting reagent (relative to $H_2$) in the rebalancing reaction. Thus, responsive to the redox flow battery system operating under the first condition, electrolyte may be supplied to and maintained at the RBC 780 at a flow rate equivalent to the upper threshold electrolyte flow rate 814 to maximize $R_{rebalancing}$ for the given hydrogen gas flow rate 820. Furthermore, as the redox flow battery SOC increases from 0% to the threshold redox flow battery SOC 808 (and as the electrolyte concentration increases from A to the threshold electrolyte concentration 858), the hydrogen gas flow rate 820 supplied to the RBC 780 is responsively increased, in order to supply enough hydrogen gas to sustain $R_{rebalancing}$. As the redox flow battery SOC decreases from the threshold redox flow battery SOC 808 to 0% (and as the electrolyte concentration decreases from the threshold electrolyte concentration 858 to A), the hydrogen gas flow rate 820 supplied to the RBC 780 is responsively decreased, in order to supply enough hydrogen gas to sustain $R_{rebalancing}$. In this way, modulating the hydrogen gas flow rate responsive to a change in the redox flow battery SOC during the first condition may include maintaining $Q_{mass,H2}$ / $Q_{mass,electrolyte}$ greater than $(Q_{mass,H2}$ / $Q_{mass,electrolyte})_{TH}$ to preserve a slight stoichiometric excess in $H_2$ relative to the electrolyte (e.g., ferric ion for an IFB) as given by the rebalancing reaction equation (4) at the RBC 780 in order to mitigate flooding of the RBC 780.

During the third condition, the redox flow battery SOC is higher than the threshold redox flow battery SOC (and the electrolyte concentration is higher than the threshold electrolyte concentration), and the hydrogen gas concentration at the RBC 780 may be a limiting reagent (relative to the electrolyte) in the rebalancing reaction. Thus, responsive to the redox flow battery system operating under the third condition, hydrogen gas may be supplied to and maintained at the RBC 780 at a flow rate equivalent to the upper threshold hydrogen gas flow rate 824 to maximize $R_{rebalancing}$ for the given electrolyte flow rate 810. Furthermore, as the redox flow battery SOC increases from the threshold redox flow battery SOC 808 to 100% (and as the electrolyte concentration increases from the threshold electrolyte concentration 858 to B), the electrolyte flow rate 810 supplied to the RBC 780 is responsively decreased to avoid operating the RBC 780 with a large excess of electrolyte, which can lead to flooding of the RBC 780. Reducing the electrolyte flow rate as the redox flow battery SOC increases helps to maintain enough hydrogen gas at the RBC 780 to avoid flooding, while maintaining a constant $R_{rebalancing}$. As the redox flow battery SOC decreases from 100% to the threshold redox flow battery SOC 808 (and as the electrolyte concentration decreases from B to the threshold electrolyte concentration 858), the electrolyte flow rate 810 supplied to the RBC 780 is responsively increased, in order to supply enough electrolyte to maintain a constant $R_{rebalancing}$. In this way, modulating the electrolyte flow rate 810 responsive to a change in the redox flow battery SOC during the third condition may include maintaining $Q_{mass,H2}$ / $Q_{mass,electrolyte}$ greater than $(Q_{mass,H2}$ / $Q_{mass,electrolyte})_{TH}$ to preserve a slight stoichiometric excess in $H_2$ relative to the electrolyte (e.g., ferric ion for an IFB) at the RBC 780 as given by the rebalancing reaction equation (4) in order to mitigate flooding of the RBC 780.

During the second condition, the redox flow battery SOC is equivalent to the threshold redox flow battery SOC 808 (and the electrolyte concentration is equivalent to the threshold electrolyte concentration 858). Thus, responsive to the redox flow battery system operating under the second condition, electrolyte may be supplied to and maintained at the RBC 780 at a flow rate equivalent to the upper threshold electrolyte flow rate 814 while hydrogen gas may be supplied to and maintained at the RBC 780 at a flow rate equivalent to the upper threshold hydrogen gas flow rate 824, to maximize $R_{rebalancing}$. Thus, during the second condition, $Q_{mass,H2} = Q_{H2,TH,upper} * [H_2]$ and $Q_{mass, electrolyte} = Q_{electrolyte,TH,upper} * [Electrolyte]_{TH}$, and $(Q_{mass,H2}$ / $Q_{mass,electrolyte})_{TH} = (Q_{H2,TH,upper} * [H_2]) / (Q_{electrolyte,TH,upper} * [Electrolyte]_{TH})$, as represented by equation (15). The second condition represents a transitional operating region from the first condition to the third condition where the limiting reagent in the rebalancing reaction transitions from being the electrolyte (e.g., ferric ion for an IFB) to being hydrogen gas. Conversely, the second condition also represents a transitional operating region from the third condition to the first condition where the limiting reagent in the rebalancing reaction transitions from being hydrogen gas to being the electrolyte (e.g., ferric ion for an IFB).

Referring now to FIGS. 9 and 10, methods 900 and 1000 for operating a redox flow battery system 10 including a rebalancing cell 780 is shown. Specifically, the rebalancing cell 780 may be implemented in a redox flow battery system 10 for maintaining a rebalancing reaction rate and a mass flow ratio of hydrogen gas to electrolyte at a threshold mass flow ratio, while reducing a chance for electrolyte flooding at the RBC 780. In an exemplary embodiment, the redox flow battery system may be the redox flow battery system 10 of FIG. 1 and the rebalancing cell may be the rebalancing cell 202 of FIGS. 2A and 2B. Accordingly, methods 900 and 1000 may be considered with reference to the embodiments of FIGS. 1, 2A, 2B, 3, 4A, 4B, 5A, 5B, 6A, 6B, 7A, and 7B, alone or in combination, (though it may be understood that similar methods may be applied to other systems without departing from the scope of the present disclosure). For example, with methods 900 and 1000, at least some steps or portions of steps (e. g., involving modulating the electrolyte flow rate and the $H_2$ gas flow rate) may be carried out via the controller 88 of FIG. 1, and may be stored as executable instructions at a non-transitory storage medium (e. g., memory) communicably coupled to the controller 88. To elaborate, the $H_2$ gas flow rate to the RBC 780 may be driven by sending commands from a controller to the hydrogen flow generator 770 and the electrolyte flow rate to the RBC 780 may be driven by sending commands from the controller 88 to one or more of the main electrolyte pump 730, auxiliary electrolyte pump 776, and the control valve 774. Further components described with reference to FIGS. 9 and 10 may be examples of corresponding components of FIGS. 1, 2A, 2B, 3, 4A, 4B, 5A, 5B, 6A, 6B, 7A, and 7B.

Method 900 includes step 910 where the controller 88 may estimate and/or measure redox flow battery system operating conditions such as redox flow battery SOC, hydrogen gas flow rate, electrolyte flow rate, the operating mode of the redox flow battery (e.g., charging mode, discharging mode, idle mode), and the like.

At 920, the method 900 includes calculating the electrolyte concentration from the measured SOC. In one example, the controller 88 may infer the electrolyte concentration from a pre-determined calibration look-up table of electrolyte concentration data versus redox flow battery SOC.

Next, at 930, the method 900 includes maintaining the rebalancing reaction rate, $R_{rebalancing}$, and maintaining $(Q_{mass,H2} / Q_{mass,electrolyte}) > (Q_{mass,H2} / Q_{mass,electrolyte})_{TH}$. In particular, at 934 the controller 88 may adjust the electrolyte flow rate and/or may adjust the hydrogen gas flow rate supplied to the RBC 780, according to method 1000 of FIG. 10.

Turning now to FIG. 10, the method 1000 includes step 1010, where the controller 88 determines if a first condition is satisfied. As described above with reference to FIGS. 8A and 8B, the first condition being satisfied includes when a redox flow battery SOC is less than a threshold SOC 808. The first condition being satisfied may further include when an electrolyte concentration is less than a threshold electrolyte concentration 858. In the case of an IFB, the electrolyte concentration being less than a threshold electrolyte concentration 858 may correspond to a ferric ion concentration being less than a threshold ferric ion concentration. Responsive to the first condition being satisfied, method 1000 continues to 1014, where the controller 88 sets the electrolyte volumetric flow rate, $Q_{electrolyte} = Q_{electrolyte,TH,upper}$. Furthermore, responsive to an increase in SOC and/or electrolyte concentration, the controller 88 may increase the hydrogen gas flow rate while maintaining $Q_{electrolyte} = Q_{electrolyte,TH,upper}$. Further still, responsive to a decrease in SOC and/or electrolyte concentration, the controller 88 may decrease the hydrogen gas flow rate while maintaining $Q_{electrolyte} = Q_{electrolyte,TH,upper}$. Accordingly, the controller 88 may adjust the hydrogen gas flow rate responsive to changes in the SOC while maintaining $Q_{electrolyte} = Q_{electrolyte,TH,upper}$ during the first condition to supply enough hydrogen to the RBC 780 to sustain the desired rebalancing reaction rate while mitigating flooding. Further still, at 1014, while modulating the hydrogen gas flow rate responsive to the changes in the redox flow battery SOC, the controller 88 may maintain the hydrogen flow rate 820 above a lower threshold hydrogen flow rate 822, $Q_{H2,TH,lower}$. $Q_{H2,TH,lower}$ may correspond to a hydrogen gas flow rate below which flooding of the RBC 780 is increased, even at or near a redox flow battery SOC of 0% and an electrolyte concentration of A (see FIGS. 8A and 8B).

Returning to 1010, for the case where the first condition is not satisfied, method 1000 continues at 1020 where the controller determines if a third condition is satisfied. As described above with reference to FIGS. 8A and 8B, the third condition being satisfied includes when a redox flow battery SOC is greater than a threshold SOC 808. The third condition being satisfied may further include when an electrolyte concentration is greater than a threshold electrolyte concentration 858. In the case of an IFB, the electrolyte concentration being greater than a threshold electrolyte concentration 858 may correspond to a ferric ion concentration being greater than a threshold ferric ion concentration. Responsive to the third condition being satisfied, method 1000 continues to 1024, where the controller 88 sets the hydrogen volumetric gas flow rate, $Q_{H2} = Q_{H2,TH,upper}$. Furthermore, responsive to an increase in SOC and/or electrolyte concentration, the controller 88 may decrease the electrolyte volumetric flow rate while maintaining $Q_{H2} = Q_{H2,TH,upper}$. Further still, responsive to a decrease in SOC and/or electrolyte concentration, the controller 88 may increase the electrolyte volumetric flow rate while maintaining $Q_{H2} = Q_{H2,TH,upper}$. Accordingly, the controller 88 may adjust the electrolyte volumetric flow rate responsive to changes in the SOC while maintaining $Q_{H2} = Q_{H2,TH,upper}$ during the third condition to supply enough electrolyte to the RBC 780 to sustain the desired rebalancing reaction rate while mitigating flooding. Further still, at 1024, while modulating the electrolyte flow rate responsive to changes in the redox flow battery state of charge, the controller 88 may maintain the electrolyte flow rate 810 above a lower threshold electrolyte flow rate 812, $Q_{electrolyte,TH,lower}$. $Q_{electrolyte,TH,lower}$ may correspond to an electrolyte flow rate below which a rebalancing reaction rate decreases such that a performance of the redox flow battery system is substantially reduced.

Returning to 1020, for the case where the third condition is not satisfied, method 1000 continues at 1030 where the controller 88 determines if a second condition is satisfied. As described above with reference to FIGS. 8A and 8B, the second condition being satisfied includes when a redox flow battery SOC is equivalent to the threshold SOC 808. The second condition being satisfied may further include when an electrolyte concentration is equivalent to the threshold electrolyte concentration 858. Responsive to the second condition being satisfied, method 1000 continues to 1034, where the controller 88 sets the hydrogen volumetric gas flow rate, $Q_{H2} = Q_{H2,TH,upper}$ and sets the volumetric electrolyte volumetric flow rate $Q_{electrolyte} = Q_{electrolyte,TH,upper}$. Accordingly, responsive to either an increase or decrease in SOC and/or electrolyte concentration, the controller 88 maintains $Q_{electrolyte} = Q_{electrolyte,TH,upper}$ while maintaining $Q_{H2} = Q_{H2,TH,upper}$ during the third condition to sustain the desired rebalancing reaction rate while mitigating flooding.

After 1014, 1024, and 1034, method 1000 returns to method 900 after 934. After 934, method 900 ends.

In this manner, a method of operating a rebalancing cell in a redox flow battery system includes, measuring a state-of-charge (SOC) of a redox flow battery in the redox flow battery system, calculating an electrolyte concentration from the measured SOC of the redox flow battery, and maintaining a rebalancing reaction rate at the rebalancing cell, including, responsive to a change in the electrolyte concentration, adjusting an electrolyte flow rate to the rebalancing cell and adjusting a hydrogen flow rate to the rebalancing cell. In a first example, the method further includes, wherein adjusting the electrolyte flow rate responsive to the change in the electrolyte concentration includes reducing the electrolyte flow rate responsive to an increase in the electrolyte concentration during a third condition, including when the electrolyte concentration is above a threshold electrolyte concentration. In a second example, optionally including the first example, the method further includes, wherein adjusting the hydrogen flow rate responsive to the change in the electrolyte concentration includes increasing the hydrogen flow rate responsive to the increase in the electrolyte concentration during a first condition, including when the electrolyte concentration is below the threshold electrolyte concentration. In a third example, optionally including one or more of the first and second examples, the method further includes, wherein adjusting the electrolyte flow rate responsive to the change in the electrolyte concentration includes setting the electrolyte flow rate to an upper threshold electrolyte flow rate during the first condition. In a fourth example, optionally including one or more of the first through third examples, the method further includes, wherein adjusting the hydrogen flow rate responsive to the change in the electrolyte concentration includes setting the hydrogen flow rate to an upper threshold hydrogen flow rate during the third condition. In a fifth example, optionally including one or more of the first through fourth examples, the method further includes, wherein maintaining the rebalancing reaction rate at the rebalancing cell includes maintaining the electrolyte flow rate below an upper threshold electrolyte flow rate. In a sixth example, optionally including one or more of the first through fifth examples, the method further includes, wherein maintaining the rebalancing reaction rate at the rebalancing cell includes maintaining the hydrogen flow rate above a lower threshold hydrogen flow rate. In a seventh example, optionally including one or more of the first through sixth examples, the method further includes, wherein adjusting the electrolyte flow rate responsive to the change in the electrolyte concentration includes setting the electrolyte flow rate to the upper threshold electrolyte flow rate during a second condition, including when the electrolyte concentration is at the threshold electrolyte concentration. In an eighth example, optionally including one or more of the first through seventh examples, the method further includes, wherein adjusting the hydrogen flow rate responsive to the change in the electrolyte concentration includes setting the hydrogen flow rate to an upper threshold hydrogen flow rate during the second condition.

In this manner, a method of operating a redox flow battery system includes, recirculating an electrolyte between a redox flow battery and a rebalancing cell, supplying a hydrogen gas to the rebalancing cell, measuring a state-of-charge (SOC) of the redox flow battery, and maintaining a rebalancing reaction rate at the rebalancing cell, including, adjusting a flow rate of the electrolyte to the rebalancing cell and adjusting a flow rate of the hydrogen gas to the rebalancing cell based on the measured SOC of the redox flow battery. In a first example, the method further includes, wherein adjusting the flow rate of the electrolyte to the rebalancing cell and adjusting the flow rate of the hydrogen gas to the rebalancing cell based on the measured SOC of the redox flow battery includes reducing the flow rate of the electrolyte responsive to an increase in the measured SOC of the redox flow battery while maintaining a flow rate of the hydrogen gas at an upper threshold hydrogen gas flow rate during a condition when the measured SOC of the redox flow battery is above a threshold redox flow battery SOC. In a second example, optionally including the first example, the method further includes, wherein adjusting the flow rate of the electrolyte to the rebalancing cell and adjusting the flow rate of the hydrogen gas to the rebalancing cell based on the measured SOC of the redox flow battery includes increasing the flow rate of the hydrogen gas responsive to an increase in the measured SOC of the redox flow battery while maintaining a flow rate of the electrolyte at an upper threshold electrolyte flow rate during a condition when the measured SOC of the redox flow battery is below a threshold redox flow battery SOC. In a third example, optionally including one or more of the first and second examples, the method further includes, wherein adjusting the flow rate of the electrolyte to the rebalancing cell and adjusting the flow rate of the hydrogen gas to the rebalancing cell based on the measured SOC of the redox flow battery includes maintaining the flow rate of the hydrogen gas at the upper threshold hydrogen gas flow rate and maintaining the flow rate of the electrolyte at the upper threshold electrolyte flow rate during a condition when the measured SOC of the redox flow battery is at the threshold redox flow battery SOC. In a fourth example, optionally including one or more of the first through third examples, the method further includes, wherein maintaining a rebalancing reaction rate at the rebalancing cell includes maintaining a ratio of a mass flow rate of the hydrogen gas to the rebalancing cell to a mass flow rate of the electrolyte to the rebalancing cell above a threshold mass flow ratio. In a fifth example, optionally including one or more of the first through fourth examples, the method further includes, wherein maintaining the ratio of the mass flow rate of the hydrogen gas to the rebalancing cell to the mass flow rate of the electrolyte to the rebalancing cell above the threshold mass flow ratio includes maintaining a stoichiometric excess in hydrogen gas relative to the electrolyte at the rebalancing cell.

As described herein with reference to FIGS. 11A and 11B, in one example, the redox flow battery SOC may be determined from the redox flow battery plating efficiency and shunt current flow. In particular, the plating efficiency and shunt current flow are used to calculate positive and negative electrolyte SOC values; in addition, the redox flow battery open circuit voltage (OCV) is used to calculate an OCV SOC value, $SOC_{OCV}$. Subsequently, an estimate for the redox flow battery SOC may be determined from the combination of the positive and negative electrolyte SOC values, and the estimated redox flow battery SOC may be adjusted based on a comparison of the estimated redox flow battery SOC to the $SOC_{OCV}$.

Referring now to FIG. 11A, a plot 1100 that illustrates an example relationship between plating electrolyte pH and negative electrode plating efficiency is shown. The plot represents a function that outputs a negative electrode plating efficiency. The function may be referenced or indexed via plating electrolyte pH. The vertical axis represents negative electrolyte plating efficiency and negative electrolyte plating efficiency increases in the direction of the vertical axis arrow. The horizontal axis represents plating electrolyte pH and plating electrolyte pH increases in the direction of the horizontal axis arrow.

Curve 1102 represents the relationship between plating electrolyte pH and negative electrode plating efficiency, which may be referred to as the coulombic efficiency for the negative plating reaction. In one example, curve 302 may be expressed in equation (15) as:

$$Plate_{eff} = 0.138 * ln\ (pH) + 0.8514 \qquad (15)$$

where $Plate_{eff}$ is the plating efficiency of the negative electrode, $ln$ is the natural logarithm, and pH is the pH value of the plating electrolyte.

In one example, the plating efficiency may be empirically determined via adjusting the pH of the plating electrolyte and determining the plating efficiency for each pH value during charging of the iron flow electric energy storage cell. The plating efficiency may be determined via dividing the actual weight of metal deposited to the negative electrode during charging of the iron flow electric energy storage cell by the theoretical weight of metal that would be deposited to the negative electrode during charging of the iron flow electric energy storage cell according to Faraday's law.

Referring now to FIG. 11B, a plot 1152 that illustrates an example relationship between battery SOC and open circuit voltage (OCV) is shown. The plot represents a function that outputs SOC for a battery. The function may be referenced or indexed by OCV (e.g., voltage of the IFB cell or cell stack when the IFB cell or cell stack is disconnected from external electric loads). The vertical axis represents plating OCV and OCV increases in the direction of the vertical axis arrow. The horizontal axis represents SOC % and SOC % increases in the direction of the horizontal axis arrow.

Curve 1152 represents the relationship between SOC % and OCV. In one example, curve 402 may be expressed in equation (16) as:

$$SOC_{OCV} = -0.518 * (OCV)^2 + 67.098 * (OCV) - 2010.7 \qquad (16)$$

where $SOC_{OCV}$ is the battery SOC determined from OCV and OCV is the open circuit voltage of the selected battery.

In one example, the SOC and OCV relationship may be empirically determined by measuring the OCV and then fully discharging the battery while measuring the amount of charge that leaves the battery during the discharge process. The amount of charge that exits the battery during the discharge process divided by theoretical amount of charge the battery may store indicates the SOC for the particular OCV.

The change in operation from charging to discharging, or vice-versa, provides an opportunity to determine an OCV of the redox flow battery without interrupting operation of the redox flow battery system. As examples, the controller may switch from charging redox flow battery to discharging the redox flow battery when a SOC increases above an upper threshold SOC during charging. Similarly, the controller may switch from discharging redox flow battery to charging the redox flow battery when a SOC decreases below a lower threshold SOC while discharging. Alternatively, a controller 88 may demand that the redox flow battery switch operation from discharging mode to charging mode, or vice-versa. The upper threshold SOC and lower threshold SOC may be predetermined quantities, and may correspond to when the redox flow battery is charged to capacity and fully discharged, respectively. Controller 88 may electrically decouple the redox flow battery from the voltage source or load, other redox flow batteries, and external electric power supplies and consumers for a threshold decoupling duration, for example, at least 30 seconds. The controller 88 then determines the $SOC_{OCV}$ (state of charge based on open circuit voltage) by way of equation (16).

SOC values for the redox flow battery positive and negative electrolytes, $SOC_{pos}$ and $SOC_{neg}$ respectively, are determined from equations (17) and (18):

$$SOC_{pos} = \frac{\sum_{i=0}^{n}\left(\frac{IT100}{F} - \frac{I_{s,pos,i}}{F} - A_a N_{Fe3+}\right)\Delta t_i}{V_{pos,0}[Fe^{2+}]_0 + \sum_{i=0}^{n}[-(N_{Fe2+} + N_{Fe3+})A_a\Delta t_i]} \qquad (17)$$

$$SOC_{neg} = \frac{\sum_{i=0}^{n}\left(\frac{IT100*\eta}{2F} - \frac{I_{s,neg,i}}{2F} - \frac{1}{2}A_a N_{Fe3+}\right)\Delta t_i}{V_{neg,0}[Fe^{2+}]_0 + \sum_{i=0}^{n}\left[\left(N_{Fe2+} + \frac{3}{2}N_{Fe3+}\right)A_a\Delta t_i\right]} \qquad (18)$$

where $SOC_{pos}$ is SOC based on positive electrolyte, $n$ is the number of steps in the summation during the time interval in which SOC is estimated, $IT100$ is the total current flow through the electric energy cell stack during the time interval in which SOC is estimated, F is Faraday's number, $I_{s,pos,i}$ is the total shunt current for the positive electrolyte during the time interval in which SOC is estimated, $A_a$ is the iron flow battery system active area, $N_{Fe3+}$ is the flux density for ferric ions from the positive electrolyte to the negative electrolyte, $\Delta t_i$ is the time interval between steps, $V_{pos,0}$ is the initial volume of the positive electrolyte, $[Fe^{2+}]_0$ is the initial concentration of ferrous ions in the positive and negative electrolytes, $N_{Fe2+}$ is the flux density for ferrous ions from the positive electrolyte to the negative electrolyte, $SOC_{neg}$ is SOC based on negative electrolyte, $\eta$ is the coulombic efficiency (e.g., the plating efficiency given by equation (14)) for the negative plating reaction, $I_{s,neg,i}$ is the total shunt current for the negative electrolyte during the time interval in which SOC is estimated, and $V_{neg,0}$ is the initial volume of the negative electrolyte.

The shunt current may be empirically determined. In one example, the shunt current in the redox flow battery may be empirically determined via measuring battery capacity loss over idling conditions where no external current is applied, but all redox flow battery cells are connected via an electrolyte shunt path. Ionic movement within the electric energy storage device cell stack. The ionic movement (e.g., flux density per redox flow battery system active area) may be empirically determined. In one example, the ionic movement in the redox flow battery may be empirically determined via ex-situ measurement of electrolyte ionic concentrations via ion chromatography.

During charging, an estimate for the redox flow battery SOC is given by equation (19):

$$SOC = max\ (SOC_{pos},\ SOC_{neg}) \qquad\qquad (19)$$

where max is a function that returns the greater value of arguments $SOC_{pos}$ and $SOC_{neg}$. During discharging, an estimate for the redox flow battery SOC is given by equation (20):

$$SOC = min\ (SOC_{pos},\ SOC_{neg}) \qquad\qquad (20)$$

where min is a function that returns the lesser value of arguments $SOC_{pos}$ and $SOC_{neg}$.

When the estimate for the redox flow battery SOC, given by equation (19) or (20) is within 10% of $SOC_{OCV}$, SOC may be adjusted according to equation (21):

$$SOC = SOC * (SOC/SOC_{OCV}) \qquad\qquad (21)$$

When the estimate for the redox flow battery SOC, given by equation (19) or (20) is not within 10% of $SOC_{OCV}$, electrolyte rebalancing and or cleansing may be indicated.

In this manner, a redox flow battery system includes, a redox flow battery, a rebalancing cell fluidly coupled to the redox flow battery an electrolyte flow control device fluidly coupled between the redox flow battery and the rebalancing cell, a hydrogen flow control device fluidly coupled between the redox flow battery and the rebalancing cell, and a controller, including executable instructions stored in non-transitory memory thereon to, maintain an electrolyte rebalancing reaction rate at the rebalancing cell, including, responsive to a change in a concentration of an electrolyte, modulating the electrolyte flow control device to adjust a flow rate of the electrolyte supplied to the rebalancing cell, and modulating the hydrogen flow control device to adjust a flow rate of hydrogen supplied to the rebalancing cell. In a first example, the redox flow battery system further includes, wherein the redox flow battery includes an all iron redox flow battery (IFB), and the electrolyte includes ferric ion. In a second example, optionally including the first example, the redox flow battery system further includes, wherein the rebalancing cell includes a stack of electrode assemblies, each electrode assembly of the stack of electrode assemblies including an interfacing pair of positive and negative electrodes, wherein the electrolyte rebalancing reaction rate is driven via internal electrical shorting of interfacing pairs of the positive and negative electrodes of the rebalancing cell and the electrolyte and the hydrogen being convected through the electrolyte rebalancing cell. In a third example, optionally including one or more of the first and second examples, the redox flow battery system further includes, wherein the electrolyte flow control device includes one of a pump and a flow control valve. In a fourth example, optionally including one or more of the first through third examples, the redox flow battery system further includes, wherein the hydrogen flow control device includes a speed modulation device coupled to one of a venturi injector and a blower.

The technical effect of the method for the redox flow battery system described herein is to maximize the rebalancing reaction rate and reduce electrolyte flooding at a rebalancing cell while decreasing operating costs by modulating hydrogen gas flow and electrolyte flow to the rebalancing cell based on the redox flow battery SOC and/or electrolyte concentration.

FIGS. 1, 2A, 2B, 3, 4A, 4B, 5A, 5B, 6A, 6B, 7A, and 7B show example configurations with relative positioning of the various components. If shown directly contacting each other, or directly coupled, then such elements may be referred to as directly contacting or directly coupled, respectively, at least in one example. Similarly, elements shown contiguous or adjacent to one another may be contiguous or adjacent to each other, respectively, at least in one example. As an example, components laying in face-sharing contact with each other may be referred to as in face-sharing contact. As another example, elements positioned apart from each other with only a space there-between and no other components may be referred to as such, in at least one example. As yet another example, elements shown above/below one another, at opposite sides to one another, or to the left/right of one another may be referred to as such, relative to one another. Further, as shown in the figures, a topmost element or point of element may be referred to as a "top" of the component and a bottommost element or point of the element may be referred to as a "bottom" of the component, in at least one example. As used herein, top/bottom, upper/lower, above/below, may be relative to a vertical axis of the figures and used to describe positioning of elements of the figures relative to one another. As such, elements shown above other elements are positioned vertically above the other elements, in one example. As yet another example, shapes of the elements depicted within the figures may be referred to as having those shapes (e. g., such as being circular, straight, planar, curved, rounded, chamfered, angled, or the like). Further, elements shown intersecting one another may be referred to as intersecting elements or intersecting one another, in at least one example. Further still, an element shown within another element or shown outside of another element may be referred as such, in one example. FIGS. 2A, 2B, 3, 4A, 4B, 5A, 5B, 6A, and 6B are drawn approximately to scale, although other dimensions or relative dimensions may be used.

The subject matter of the present application will now be described again in the form of aspects, which describe the present invention independently from the previous description. The aspects can however also be combined with any disclosure contained elsewhere in the present specification. Further, the embodiments described above also form embodiments of the following aspects.

Aspects:

1. A method of operating a rebalancing cell in a redox flow battery system, comprising:

measuring a state-of-charge (SOC) of a redox flow battery in the redox flow battery system,
calculating an electrolyte concentration from the measured SOC of the redox flow battery, and
maintaining a rebalancing reaction rate at the rebalancing cell, including, responsive to a change in the electrolyte concentration,

adjusting an electrolyte flow rate to the rebalancing cell and
adjusting a hydrogen flow rate to the rebalancing cell.

2. The method of aspect 1, wherein adjusting the electrolyte flow rate responsive to the change in the electrolyte concentration includes reducing the electrolyte flow rate responsive to an increase in the electrolyte concentration during a third condition, including when the electrolyte concentration is above a threshold electrolyte concentration.

3. The method of aspect 1 or 2, wherein adjusting the hydrogen flow rate responsive to the change in the electrolyte concentration includes increasing the hydrogen flow rate responsive to the increase in the electrolyte concentration during a first condition, including when the electrolyte concentration is below the threshold electrolyte concentration.

4. The method of any one of the preceding aspects, wherein adjusting the electrolyte flow rate responsive to the change in the electrolyte concentration includes setting the electrolyte flow rate to an upper threshold electrolyte flow rate during the first condition.

5. The method of any one of the preceding aspects, wherein adjusting the hydrogen flow rate responsive to the change in the electrolyte concentration includes setting the hydrogen flow rate to an upper threshold hydrogen flow rate during the third condition.

6. The method of any one of the preceding aspects, wherein maintaining the rebalancing reaction rate at the rebalancing cell includes maintaining the electrolyte flow rate below an upper threshold electrolyte flow rate.

7. The method of any one of the preceding aspects, wherein maintaining the rebalancing reaction rate at the rebalancing cell includes maintaining the hydrogen flow rate above a lower threshold hydrogen flow rate.

8. The method of any one of the preceding aspects, wherein adjusting the electrolyte flow rate responsive to the change in the electrolyte concentration includes setting the electrolyte flow rate to the upper threshold electrolyte flow rate during a second condition, including when the electrolyte concentration is at the threshold electrolyte concentration.

9. The method of any one of the preceding aspects, wherein adjusting the hydrogen flow rate responsive to the change in the electrolyte concentration includes setting the hydrogen flow rate to an upper threshold hydrogen flow rate during the second condition.

10. A redox flow battery system, comprising:

a redox flow battery,
a rebalancing cell fluidly coupled to the redox flow battery
an electrolyte flow control device fluidly coupled between the redox flow battery and the rebalancing cell,
a hydrogen flow control device fluidly coupled between the redox flow battery and the rebalancing cell, and
a controller, including executable instructions stored in non-transitory memory thereon to,
maintain an electrolyte rebalancing reaction rate at the rebalancing cell, including, responsive to a change in a concentration of an electrolyte,

modulating the electrolyte flow control device to adjust a flow rate of the electrolyte supplied to the rebalancing cell, and
modulating the hydrogen flow control device to adjust a flow rate of hydrogen supplied to the rebalancing cell.

11. The redox flow battery system of aspect 10, wherein the redox flow battery includes an all iron redox flow battery (IFB), and the electrolyte includes ferric ion.

12. The redox flow battery system of aspect 10 or 11, wherein the rebalancing cell includes a stack of electrode assemblies, each electrode assembly of the stack of electrode assemblies including an interfacing pair of positive and negative electrodes, wherein the electrolyte rebalancing reaction rate is driven via internal electrical shorting of interfacing pairs of the positive and negative electrodes of the rebalancing cell and the electrolyte and the hydrogen being convected through the electrolyte rebalancing cell.

13. The redox flow battery system of any one of the preceding aspects, wherein the electrolyte flow control device includes one of a pump and a flow control valve.

14. The redox flow battery system of any one of the preceding aspects, wherein the hydrogen flow control device includes a speed modulation device coupled to one of a venturi injector and a blower.

15. A method of operating a redox flow battery system, comprising:
recirculating an electrolyte between a redox flow battery and a rebalancing cell,

supplying a hydrogen gas to the rebalancing cell,
measuring a state-of-charge (SOC) of the redox flow battery, and
maintaining a rebalancing reaction rate at the rebalancing cell, including,
adjusting a flow rate of the electrolyte to the rebalancing cell and adjusting a flow rate of the hydrogen gas to the rebalancing cell based on the measured SOC of the redox flow battery.

16. The method of aspect 15, wherein adjusting the flow rate of the electrolyte to the rebalancing cell and adjusting the flow rate of the hydrogen gas to the rebalancing cell based on the measured SOC of the redox flow battery includes reducing the flow rate of the electrolyte responsive to an increase in the measured SOC of the redox flow battery while maintaining a flow rate of the hydrogen gas at an upper threshold hydrogen gas flow rate during a condition when the measured SOC of the redox flow battery is above a threshold redox flow battery SOC.

17. The method of aspect 15 or 16, wherein adjusting the flow rate of the electrolyte to the rebalancing cell and adjusting the flow rate of the hydrogen gas to the rebalancing cell based on the measured SOC of the redox flow battery includes increasing the flow rate of the hydrogen gas responsive to an increase in the measured SOC of the redox flow battery while maintaining a flow rate of the electrolyte at an upper threshold electrolyte flow rate during a condition when the measured SOC of the redox flow battery is below a threshold redox flow battery SOC.

18. The method of any one of aspects 15 to 17, wherein adjusting the flow rate of the electrolyte to the rebalancing cell and adjusting the flow rate of the hydrogen gas to the rebalancing cell based on the measured SOC of the redox flow battery includes maintaining the flow rate of the hydrogen gas at the upper threshold hydrogen gas flow rate and maintaining the flow rate of the electrolyte at the upper threshold electrolyte flow rate during a condition when the measured SOC of the redox flow battery is at the threshold redox flow battery SOC.

19. The method of any one of aspects 15 to 18, wherein maintaining a rebalancing reaction rate at the rebalancing cell includes maintaining a ratio of a mass flow rate of the hydrogen gas to the rebalancing cell to a mass flow rate of the electrolyte to the rebalancing cell above a threshold mass flow ratio.

20. The method of any one of aspects 15 to 17'9, wherein maintaining the ratio of the mass flow rate of the hydrogen gas to the rebalancing cell to the mass flow rate of the electrolyte to the rebalancing cell above the threshold mass flow ratio includes maintaining a stoichiometric excess in hydrogen gas relative to the electrolyte at the rebalancing cell.

The following claims particularly point out certain combinations and sub-combinations regarded as novel and non-obvious. These claims may refer to "an" element or "a first" element or the equivalent thereof. Such claims should be understood to include incorporation of one or more such elements, neither requiring nor excluding two or more such elements. Other combinations and sub-combinations of the disclosed features, functions, elements, and/or properties may be claimed through amendment of the present claims or through presentation of new claims in this or a related application. Such claims, whether broader, narrower, equal, or different in scope to the original claims, also are regarded as included within the subject matter of the present disclosure.

**Claims**

1. A method of operating a rebalancing cell in a redox flow battery system, comprising:

    measuring a state-of-charge (SOC) of a redox flow battery in the redox flow battery system,
    calculating an electrolyte concentration from the measured SOC of the redox flow battery, and
    maintaining a rebalancing reaction rate at the rebalancing cell, including, responsive to a change in the electrolyte concentration,

        adjusting an electrolyte flow rate to the rebalancing cell and
        adjusting a hydrogen flow rate to the rebalancing cell.

2. The method of claim 1, wherein adjusting the electrolyte flow rate responsive to the change in the electrolyte concentration includes reducing the electrolyte flow rate responsive to an increase in the electrolyte concentration during a third condition, including when the electrolyte concentration is above a threshold electrolyte concentration.

3. The method of claim 1 or 2, wherein adjusting the hydrogen flow rate responsive to the change in the electrolyte concentration includes increasing the hydrogen flow rate responsive to the increase in the electrolyte concentration during a first condition, including when the electrolyte concentration is below the threshold electrolyte concentration.

4. The method of any one of claims 1 to 3, wherein adjusting the electrolyte flow rate responsive to the change in the electrolyte concentration includes setting the electrolyte flow rate to an upper threshold electrolyte flow rate during the first condition.

5. The method of any one of the preceding claims, wherein adjusting the hydrogen flow rate responsive to the change in the electrolyte concentration includes setting the hydrogen flow rate to an upper threshold hydrogen flow rate during the third condition.

6. The method of any one of the preceding claims, wherein maintaining the rebalancing reaction rate at the rebalancing cell includes maintaining the electrolyte flow rate below an upper threshold electrolyte flow rate.

7. The method of any one of the preceding claims, wherein maintaining the rebalancing reaction rate at the rebalancing cell includes maintaining the hydrogen flow rate above a lower threshold hydrogen flow rate.

8. The method of any one of the preceding claims, wherein adjusting the electrolyte flow rate responsive to the change in the electrolyte concentration includes setting the electrolyte flow rate to the upper threshold electrolyte flow rate during a second condition, including when the electrolyte concentration is at the threshold electrolyte concentration.

9. The method of any one of the preceding claims, wherein adjusting the hydrogen flow rate responsive to the change in the electrolyte concentration includes setting the hydrogen flow rate to an upper threshold hydrogen flow rate during the second condition.

10. The method of any one of the preceding claims, wherein maintaining a rebalancing reaction rate at the rebalancing cell includes maintaining a ratio of a mass flow rate of hydrogen gas to the rebalancing cell to a mass flow rate of electrolyte to the rebalancing cell above a threshold mass flow ratio and wherein maintaining the ratio of the mass flow rate of the hydrogen gas to the rebalancing cell to the mass flow rate of the electrolyte to the rebalancing cell above the threshold mass flow ratio includes maintaining a stoichiometric excess in hydrogen gas relative to the electrolyte at the rebalancing cell.

11. A redox flow battery system, comprising:

a redox flow battery,
a rebalancing cell fluidly coupled to the redox flow battery
an electrolyte flow control device fluidly coupled between the redox flow battery and the rebalancing cell,
a hydrogen flow control device fluidly coupled between the redox flow battery and the rebalancing cell, and
a controller, including executable instructions stored in non-transitory memory thereon to,
maintain an electrolyte rebalancing reaction rate at the rebalancing cell, including, responsive to a change in a concentration of an electrolyte,

modulating the electrolyte flow control device to adjust a flow rate of the electrolyte supplied to the rebalancing cell, and
modulating the hydrogen flow control device to adjust a flow rate of hydrogen supplied to the rebalancing cell.

12. The redox flow battery system of claim 11, wherein the redox flow battery includes an all iron redox flow battery (IFB), and the electrolyte includes ferric ion.

13. The redox flow battery system of claim 11 or 12, wherein the rebalancing cell includes a stack of electrode assemblies, each electrode assembly of the stack of electrode assemblies including an interfacing pair of positive and negative electrodes, wherein the electrolyte rebalancing reaction rate is driven via internal electrical shorting of interfacing pairs of the positive and negative electrodes of the rebalancing cell and the electrolyte and the hydrogen being convected through the electrolyte rebalancing cell.

14. The redox flow battery system of any one of claims 11 to 13, wherein the electrolyte flow control device includes one of a pump and a flow control valve.

15. The redox flow battery system of any one of claims 11 to 14, wherein the hydrogen flow control device includes a speed modulation device coupled to one of a venturi injector and a blower.

FIG. 1

**FIG. 2A**

FIG. 2B

FIG. 3

FIG. 4B

FIG. 4A

**FIG. 5A**

**FIG. 5B**

EP 4 391 125 A1

**FIG. 6A**

**FIG. 6B**

EP 4 391 125 A1

700 ⬎

784

786

H₂ return

H₂ flow generator

RBC
780

770

H₂ return

Electrolyte supply

Electrolyte return

H₂ supply

H₂ source
760

Control valve

774

90

96

92

62

50

98

52

60

110

To redox flow battery

730

Main electrolyte pump

**FIG. 7A**

750 ⬎

784

786

H₂ return

H₂ flow generator

RBC
780

770

H₂ return

Electrolyte supply

Electrolyte return

H₂ supply

H₂ source
760

776

Aux electrolyte pump

90

96

92

62

50

98

52

60

110

To redox flow battery

730

Main electrolyte pump

**FIG. 7B**

⊢ 800

## RBC Flow Rates by SOC

**FIG. 8A**

⊢ 850

## RBC Flow Rates by
## Electrolyte Concentration

**FIG. 8B**

900

```
          ┌─────────────┐
          │    START    │
          └─────────────┘
                 │
                 ▼
  ┌──────────────────────────────┐
  │ Estimate / measure redox flow battery │      910
  │ operating conditions (SOC, flow rates, │
  │    operating mode, and the like)       │
  └──────────────────────────────┘
                 │
                 ▼
  ┌──────────────────────────────┐
  │ Calculate [electrolyte] from measured SOC │   920
  └──────────────────────────────┘
                 │
                 ▼
  ┌──────────────────────────────┐
  │ At rebalancing cell, maintain rebalancing │   930
  │ reaction rate; maintain $(Q_{mass,H2}$ /  │
  │          $Q_{mass,electrolyte})$           │
  │ above $(Q_{mass,H2}$ / $Q_{mass,electrolyte})_{TH}$ │
  │  ┌────────────────────────────┐          │
  │  │ Adjust electrolyte flow rate and/or adjust │  934
  │  │ hydrogen gas flow rate to rebalancing │
  │  │         cell (FIG. 10)          │
  │  └────────────────────────────┘          │
  └──────────────────────────────┘
                 │
                 ▼
          ┌─────────────┐
          │   RETURN    │
          └─────────────┘
```

# FIG. 9

1000

START

First condition satisfied? ⌐1010

YES → Set $Q_{electrolyte} = Q_{electrolyte,TH,upper}$

Increase $Q_{H2}$ responsive to increase in SOC and/or [electrolyte]

Decrease $Q_{H2}$ responsive to decrease in SOC and/or [electrolyte]

Maintain $Q_{H2} > Q_{H2,TH,lower}$

1014

NO

3rd condition satisfied? ⌐1020

YES → Set $Q_{H2} = Q_{H2,TH,upper}$

Increase $Q_{electrolyte}$ responsive to increase in SOC and/or [electrolyte]

Decrease $Q_{electrolyte}$ responsive to decrease in SOC and/or [electrolyte]

Maintain $Q_{electrolyte} > Q_{electrolyte,TH,lower}$

1024

NO

2nd condition satisfied? ⌐1030

YES → Set $Q_{electrolyte} = Q_{electrolyte,TH,upper}$

Set $Q_{H2} = Q_{H2,TH,upper}$

1034

NO

RETURN

FIG. 10

FIG. 11A

FIG. 11B

Europäisches
Patentamt

European
Patent Office

Office européen
des brevets

# EUROPEAN SEARCH REPORT

**Application Number**

EP 23 21 1636

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/091696 A1 (ESS TECHNOLOGY INC [US]) 14 May 2021 (2021-05-14) | 1-14 | INV. H01M8/04186 |
| Y | * paragraph [0037] - paragraph [0049] * * paragraph [0104] - paragraph [0111] * | 15 | H01M8/04746 H01M8/18 |
| X | JP 2020 518115 A (ESS TECHNOLOGY INC) 18 June 2020 (2020-06-18) | 1-14 | |
| Y | * paragraph [0031] - paragraph [0038]; figure 1 * * paragraph [0053] - paragraph [0059]; claims 1-20 * | 15 | |
| X | US 2010/092843 A1 (CONWAY BRUCE [US]) 15 April 2010 (2010-04-15) * paragraph [0030] - paragraph [0033]; claims 1-9 * | 1,11,15 | |
| X | US 8 980 454 B2 (ENERVAULT CORP [US]) 17 March 2015 (2015-03-17) * column 3, line 60 - column 5, line 7 * | 1,11 | |

**TECHNICAL FIELDS SEARCHED (IPC)**

H01M

The present search report has been drawn up for all claims

| Place of search | Date of completion of the search | Examiner |
|---|---|---|
| Munich | 6 May 2024 | Wiedemann, Eric |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

1

## ANNEX TO THE EUROPEAN SEARCH REPORT
## ON EUROPEAN PATENT APPLICATION NO.

EP 23 21 1636

This annex lists the patent family members relating to the patent documents cited in the above-mentioned European search report.
The members are as contained in the European Patent Office EDP file on
The European Patent Office is in no way liable for these particulars which are merely given for the purpose of information.

06-05-2024

| Patent document cited in search report | | Publication date | Patent family member(s) | | | Publication date |
|---|---|---|---|---|---|---|
| WO 2021091696 | A1 | 14-05-2021 | AU | 2020377870 | A1 | 26-05-2022 |
| | | | CN | 115210919 | A | 18-10-2022 |
| | | | EP | 4046220 | A1 | 24-08-2022 |
| | | | US | 2021143455 | A1 | 13-05-2021 |
| | | | US | 2023299318 | A1 | 21-09-2023 |
| | | | WO | 2021091696 | A1 | 14-05-2021 |
| JP 2020518115 | A | 18-06-2020 | AU | 2018258694 | A1 | 19-09-2019 |
| | | | AU | 2023263514 | A1 | 30-11-2023 |
| | | | CN | 110574200 | A | 13-12-2019 |
| | | | EP | 3593394 | A1 | 15-01-2020 |
| | | | JP | 7157078 | B2 | 19-10-2022 |
| | | | JP | 2020518115 | A | 18-06-2020 |
| | | | US | 2018316033 | A1 | 01-11-2018 |
| | | | US | 2024030471 | A1 | 25-01-2024 |
| | | | WO | 2018201094 | A1 | 01-11-2018 |
| US 2010092843 | A1 | 15-04-2010 | NONE | | | |
| US 8980454 | B2 | 17-03-2015 | US | 2014272483 | A1 | 18-09-2014 |
| | | | US | 2015147609 | A1 | 28-05-2015 |
| | | | WO | 2014144318 | A1 | 18-09-2014 |

EPO FORM P0459

For more details about this annex : see Official Journal of the European Patent Office, No. 12/82